(19) Europäisches Patentamt
European Patent Office
Office européen des brevets

(11) EP 3 693 409 A1

(12) EUROPEAN PATENT APPLICATION

(43) Date of publication:
**12.08.2020 Bulletin 2020/33**

(51) Int Cl.:
***C08J 7/04*** *(2020.01)*

(21) Application number: **19155912.9**

(22) Date of filing: **07.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **LOW, Hong Yee**
  **487372 Singapore (SG)**
- **DUMOND, Jarrett J.**
  **487372 Singapore (SG)**
- **MENDEZ, Alon Ramos**
  **169857 Singapore (SG)**

(74) Representative: **Modiano, Micaela Nadia et al**
**Modiano & Partners**
**Thierschstrasse 11**
**80538 München (DE)**

# (54) TEXTURED POLYMER SURFACES WITH SUPERHYDROPHILIC PROPERTIES

(57) An article includes a substrate comprising a multi-scalar texture, wherein the multi-scalar texture comprises features having at least one of a sidewall-to-sidewall spacing therebetween in a range of 0.001 micrometers to 1,000 micrometers; a diameter in a range of 0.001 micrometers to 100 micrometers; a height in a range of 0.001 micrometers to 100 micrometers; and/or a pitch in a range of 0.001 micrometers to 1,000 micrometers; and a porous polymer coating, wherein the porous polymer coating has an average pore diameter in a range of 1 nanometer to 100,000 nanometers, preferably 10 nanometers to 10,000 nanometers, more preferably 10 nanometers to 1,000 nanometers.

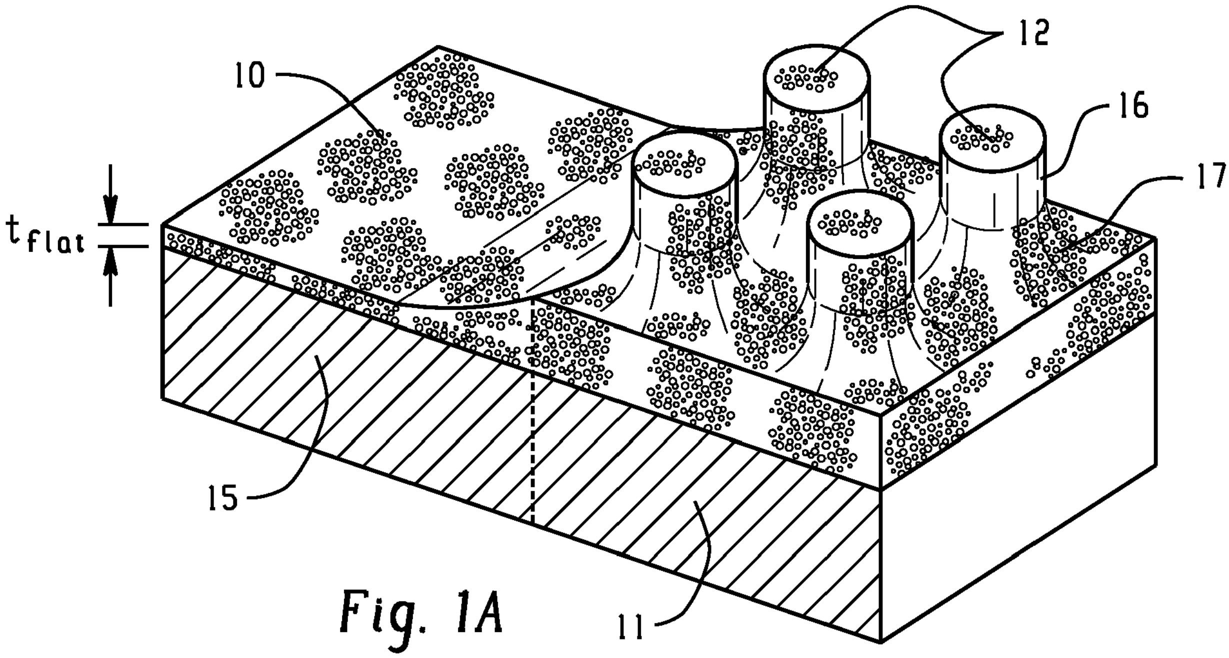


Fig. 1A

EP 3 693 409 A1

## Description

BACKGROUND

Superhydrophilic surfaces have drawn increasing commercial interest for a variety of applications including anti-fogging panes, anti-fouling / anti-microbial surfaces, anti-friction surfaced tools and devices in medicine, bioactive implants, strongly hydrophilic contact lenses, and efficient boiling-heat exchanging surfaces. Superhydrophilic surfaces are capable of forming continuous thin water films that cover the entirety of the surface which exhibit several novel properties, such as resistance to fogging, low friction against other hydrophilic surfaces, resistance to fouling and resistance to vapor bubble formation.
Desired is a superhydrophilic polymer surface.

BRIEF DESCRIPTION

An article includes a substrate comprising a multi-scalar texture, wherein the multi-scalar texture comprises features having at least one of a sidewall-to-sidewall spacing therebetween in a range of 0.001 micrometers (μm) to 1,000 micrometers; a diameter in a range of 0.001 micrometers to 100 micrometers; a height in a range of 0.001 micrometers to 100 micrometers; and/or a pitch in a range of 0.001 micrometers to 1,000 micrometers; and a porous polymer coating, wherein the porous polymer coating has an average pore diameter in a range of 1 nanometer to 100,000 nanometers, preferably 10 nanometers to 10,000 nanometers, more preferably 10 nanometers to 1,000 nanometers.
The above described and other features are exemplified by the following figures and detailed description.

BRIEF DESCRIPTION OF THE DRAWINGS

The following figures are exemplary embodiments wherein the like elements are numbered alike.

FIG. 1A and FIG. 1B show a schematic layout comparing a porous coating cast on a flat substrate with that cast on a substrate covered with a multi-scalar texture including pillars.
FIG. 2 shows a schematic of capillary rise in a simplified 1-dimensional (1-D) case (cross-sectional tubes).
FIG. 3 shows a reference sample and image for comparison with samples which incorporate a multi-scalar texture; FIG. 3A shows a scanning electron microscope (SEM) overhead view of a porous poly(methyl-methacrylate) (PMMA) cast coating on a flat silicon substrate following the above fabrication protocol; FIG. 3B shows an image of a spincast sample; and FIG. 3C shows a water contact angle image derived from the sample after following the above fabrication and analysis protocols.
FIG. 4 shows sample views of the silicon substrate including a multi-scalar texture and nylon 6 including a multi-scalar texture with the porous PMMA coating cast on top; FIG. 4A is a photograph after spincoating and removing the PS phase to form the porous PMMA coating on the silicon substrate including a multi-scalar texture; and FIG. 4B is a photograph after spincoating and removing the PS phase to form the porous PMMA coating on hot-embossed nylon 6 with the same multi-scalar texture using the silicon counterpart as a mold.
FIG. 5 shows SEM images of porous PMMA coating cast on gratings of 0.5 μm (FIG. 5A and FIG. 5B), 1 μm (FIG. 5C and FIG. 5D), and 2 μm (FIG. 5E and FIG. 5F) linewidth.
FIG. 6 shows SEM micrographs of 0.5 μm (FIG. 6A and FIG. 6B) and 1 μm (FIG. 6C and FIG. 6D) pillar arrays with the applied porous PMMA coating applied.
FIG. 7 shows SEM micrographs showing the 2-D capillary rise effect that occurred with the incorporation of a multi-scalar texture; FIG. 7A shows the 0.5 μm grating with staggered lines; FIG. 7B shows the 1 μm pillar array; and FIG. 7C and FIG. 7D shows the 0.5 μm pillar array at different angles.
FIG. 8 shows the contact angle goniometry images corresponding to the data provided in Table 2.
FIG. 9 shows corresponding goniometry images for the quantitative results provided in Table 3.
FIG. 10A, FIG. 10B, FIG. 10C, FIG. 10D, FIG. 10E, and FIG. 10F provide SEM overhead images of cast porous PMMA coatings corresponding to the contact angle results in Table 4.
FIG. 11A and FIG. 11B show photographs of a hazy porous PMMA coated glass slide and a transparent nanoporous nylon 6,6 coated glass slide under equivalent lighting conditions.
FIG. 12A and FIG. 12B show SEM images of nanoporous nylon 6,6 coatings on SU-8 epoxy-based negative photoresist at a 40° angle view (left side) and an overhead view (right side) in which the scale bars are 1 μm in length.
FIG. 13 shows SEM images of nanoporous nylon 6,6 coatings on SU-8 including a 2 μm grating array; FIG. 13A and FIG. 13B show overhead and 40° angle views, respectively, of the textured field edge, and the coatings climbing the sidewalls of the grating lines, but phase segregating at topmost surfaces of the gratings; FIG. 13C shows an opposite textured field edge, and the transition from flat topmost surfaces of the gratings to a porous conformation

on flat SU-8; and FIG. 13D shows the porous coating conformation along the 2 μm grating trenches in the center of the field.

FIG. 14A and FIG. 14B show SEM images of nanoporous nylon 6,6 coatings cast on SU-8 including a 2 μm pillar array.

FIG. 15 shows UV-Visible spectra of dry (FIG. 15A) and fogged (FIG. 15B) reference samples, including pristine glass, flat SU-8 on glass, and flat nanoporous nylon 6,6 cast on SU-8/glass.

FIG. 16 shows UV-Visible spectra of dry (FIG. 16A) and fogged (FIG. 16B) nanoporous nylon 6,6 coatings cast on SU-8 samples including a multi-scalar texture.

DETAILED DESCRIPTION

Forming discrete pores in a contiguous polymer matrix can provide porous surface conformation and minimize or resist particulation. The present inventors discovered that by forming a porous coating with a contiguous polymer matrix across a multi-scalar texture, for example, the total surface area can be increased, and superhydrophilic wetting can be generated on hydrophilic polymer materials such as PMMA. The present inventors also discovered that the total surface area can be further enhanced by forming the porous coating on sidewalls of the multi-scalar texture, for example, by casting, which can enhance superhydrophilic performance.

As used herein, "porous" means including pores, e.g., holes or gaps, having an average pore diameter in a range of 1 nanometer to 100,000 nanometers, preferably 10 nanometers to 10,000 nanometers, more preferably 10 nanometers to 1,000 nanometers, and "nanoporous" means including pores having an average pore diameter of less than 100 nanometers. The pores can have various shapes and morphology such as, for example, cylindrical, spherical, slit type, or combinations comprising at least one of the foregoing. For irregularly shaped pores, the diameter refers to a largest cross-sectional dimension of the pore.

As used herein, "superhydrophilic" means a combination of hydrophilic surface chemistry with a multi-scalar texture that obtains a static, average water contact angle of less than 10°.

In accordance with the presently disclosed superhydrophilic polymer surface, transparent porous coatings, for example, including polyimides such as nylon 6,6, can be formed. As used herein, the term "transparent" means having a haze of less than 15%, or less than 10%, or less than 5%, or less than 1%, each measured according to ASTM D1003-00 using the color space CIE1931 (Illuminant C and a 2° observer) at a sample thickness of 2.5 mm. Additionally, in a method of forming a superhydrophilic polymer surface, casting of a porous coating on a multi-scalar texture can enhance coating thickness, for example, with 2-D capillary rise effect.

Substrate

A textured surface to improve the wetting performance of a porous superhydrophilic polymer coating can increase the total surface area per square area, which can enhance wetting on hydrophilic materials. For example, a 1 μm diameter grating array, 2 μm tall, with 2 μm pitch will have three times the total surface area as a comparable flat surface of the same square area (see Table 1). Accordingly, a substrate can include any suitable material that retains the textured surface when coated, for example, by spincoating, with a porous polymer coating.

The substrate can include a hydrophilic polymer, preferably a polyamide, more preferably polycaprolactam. The substrate can include nylon 6. The substrate can include SU-8 epoxy-based negative photoresist on glass.

Silicon substrates can be textured via deep ultraviolet (UV) photolithography to form, for example, grating, hole, or pillar arrays. Porous coatings can be cast directly on silicon including a multi-scalar texture.

The substrate can be nylon 6, and textured silicon substrates can be used as a mold to hot-emboss nylon 6 bulk coatings, for example, at a temperature in a range of 30°C to 500°C, preferably 30°C to 350°C, at a pressure in a range of 0.1 to 10 megapascals (MPa), for a period of time in a range of 1 to 10 minutes. The hot-embossed multi-scalar texture fabricated on nylon 6 can be directly formed against silicon molds, and the hole arrays on silicon can became pillar arrays on nylon 6.

SU-8 epoxy-based negative photoresist, which can withstand a range of solvents that can dissolve nylon 6,6 or PMMA selectively, can be used as the material carrying the multi-scalar texture. SU-8 can be spincast on oxygen plasma treated square glass slides at revolutions per minute (RPM) in a range of 2,000 to 6,000 and soft baked at a temperature in a range of 60°C to 100°C, for example, on a hotplate, for a period of time in a range of 5 to 60 minutes. The SU-8 samples can then be hot-embossed against the silicon mold including a multi-scalar texture described above using, for example, a NX-2000 nanoimprinting tool at a temperature in a range of 80°C to 200°C under a pressure in a range of 0.1 to 10 megapascals for a period of time in a range of 1 to 10 minutes, followed by 365 nanometer i-line UV-light emitting diode (LED) exposure to cure the SU-8, for example, for a period of time in a range of 1 to 10 minutes. Prior to demolding the samples can be hard baked by ramping to a temperature in a range of 120°C to 220°C in a convection oven to fully cross-link the SU-8 against the mold.

As used herein, "multi-scalar texture" means a pattern with micrometer-sized features. Features of the multi-scalar texture can include, for example, a sidewall-to-sidewall spacing therebetween in a range of 0.001 micrometers to 1,000 micrometers, preferably 0.01 micrometers to 100 micrometers, more preferably 0.1 micrometers to 10 micrometers. Features of the multi-scalar texture can include, for example, a diameter in a range of 0.001 micrometers to 100 micrometers, preferably 0.01 micrometers to 100 micrometers, more preferably 0.1 micrometers to 10 micrometers. Features of the multi-scalar texture can include, for example, a height in a range of 0.001 micrometers to 100 micrometers, preferably 0.01 micrometers to 100 micrometers, more preferably 0.1 micrometers to 10 micrometers. Features of the multi-scalar texture can include, for example, a pitch in a range of 0.001 micrometers to 1,000 micrometers, preferably 0.01 micrometers to 100 micrometers, more preferably 0.1 micrometers to 10 micrometers.

Polymer Coating

The porous polymer coating can include a hydrophilic polymer, preferably an acrylate, a polyamide, or a polyimide, more preferably poly(methyl methacrylate) or poly[imino(1,6-dioxohexamethylene) iminohexamethylene].

The term acrylates, as used herein, is meant to embrace within its scope those polymers resulting from the polymerization of one or more acrylic acid ester monomers as well as methacrylic acid ester monomers. These monomers are represented by the general formula 1:

$$CH_2{=}CW'COOR^f \qquad (1)$$

wherein W' is hydrogen or a methyl radical and R is an alkyl radical, preferably an alkyl radical comprising carbon atoms in a range between about 1 and about 20. Some non-limiting examples of alkyl groups represented by $R^f$ include methyl, ethyl, n- propyl, isopropyl, n-butyl, isobutyl, sec-butyl, tert-butyl, pentyl, isopentyl, hexyl, and the like.

Some non-limiting examples of acrylic acid ester monomers represented by formula 1 include: methyl acrylate, isopropyl acrylate, n-propyl acrylate, n-butyl acrylate, isobutyl acrylate, 2- ethylhexyl acrylate, and the like. Some non-limiting examples of methacrylic acid ester monomers represented by formula 1 include: methyl methacrylate, ethyl methacrylate, butyl methacrylate, hexyl methacrylate, isobutyl methacrylate, propyl methacrylate, and the like, as well as reaction products and combinations comprising at least one of the foregoing.

Polyamide resins, also known as nylons, are characterized by the presence of an amide group (-C(O)NH-), and are described in U.S. Patent No. 4,970,272. Exemplary polyamide resins include, but are not limited to, nylon 6; nylon 6,6 (poly[imino(1,6-dioxohexamethylene) iminohexamethylene]); nylon 4; nylon 4,6; nylon 12; nylon 6,10; nylon 6,9; nylon 6,12; amorphous polyamides; polyphthalamides; nylon 6/6T and nylon 6,6/6T with triamine contents below 0.5 weight percent; nylon 9T and combinations comprising one or more of the foregoing polyamides. The composition may comprise two or more polyamides, for example the polyamide may comprises nylon 6 and nylon 6,6. Nylon 6,6 can exhibit excellent mechanical properties and high temperature resistance.

Polyimides have the general formula 2:

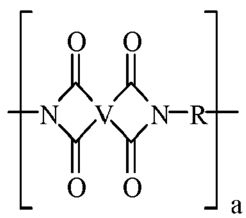

(2)

wherein a is more than 1, typically about 10 to about 1,000 or more, or more specifically about 10 to about 500; and wherein V is a tetravalent linker without limitation, as long as the linker does not impede synthesis or use of the polyimide. Suitable linkers include but are not limited to: (a) substituted or unsubstituted, saturated, unsaturated or aromatic monocyclic and polycyclic groups having about 5 to about 50 carbon atoms, (b) substituted or unsubstituted, linear or branched, saturated or unsaturated alkyl groups having 1 to about 30 carbon atoms; or combinations comprising at least one of the foregoing. Suitable substitutions and/or linkers include, but are not limited to, ethers, epoxides, amides, esters, and combinations comprising at least one of the foregoing. At least a portion of the linkers V contain a portion derived from a bisphenol.

R in formula (2) includes but is not limited to substituted or unsubstituted divalent organic radicals such as: (a) aromatic hydrocarbon radicals having about 6 to about 20 carbon atoms and halogenated derivatives thereof; (b) straight or branched chain alkylene radicals having about 2 to about 20 carbon atoms; (c) cycloalkylene radicals having about 3 to about 20 carbon atoms, or (d) divalent radicals of the general formula (3)

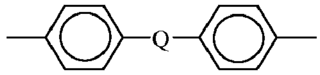

(3)

wherein Q includes but is not limited to a divalent moiety including -O-, -S-, -C(O)-, $-SO_2-$, -SO-, $-C_yH_{2y}-$ (y being an integer from 1 to 5), and halogenated derivatives thereof, including perfluoroalkylene groups.

The porous polymer coating can have an average pore diameter in a range of 1 nanometer to 100,000 nanometers, preferably 10 nanometers to 10,000 nanometers, more preferably 10 nanometers to 1,000 nanometers. The average pore diameter can be less than 100 nanometers, incident light may not scatter across the nanoporous coating, and the nanoporous polymer coating can be transparent. The average pore diameter can be obtained by dimensioning pores in SEM images of the porous polymer coating.

Assuming that porous nylon 6,6 material roughness behaves like spherical, non-absorbing (dielectric) particles to redirect the incident light, according to Rayleigh scattering theory, when light passes through particles with diameter that is below the wavelength of visible light, the intensity of scattered light, I, is

$$I/I_o = \frac{1 + cos^2\theta}{2S^2}\left(\frac{2\pi}{\lambda}\right)^4\left(\frac{n^2 - 1}{n^2 + 2}\right)\left(\frac{d}{2}\right)^6$$

where $I_o$ is the intensity of the incident light, S is the distance between the particle and the viewer/detector, and *n* is the index of refraction of the particle, *d* is the diameter of the particle, and $\lambda$ is the wavelength of light. For a particle size, e.g., diameter, smaller than 100 nanometers, Rayleigh scattering in the visible region ($\lambda$ = 532 nanometers) is less than 5% of total incident light intensity for a nylon 6,6 particle (*n* = 1.53). Whereas, for a 500-nanometer particle of PMMA (*n* = 1.49), Rayleigh scattering exceeds 10% of total incident light intensity, more than double the amount of scattering calculated for nylon 6,6. Accordingly, a pore diameter of the porous polymer coating that is less than the wavelength of light may help improve coating transparency. Preferably, the coating itself is reasonably thin to minimize light absorption. For example, for a 0.5% by weight 20:80% by weight PMMA:nylon 6,6 coating, the resulting nanoporous nylon 6,6 thickness on a flat surface is preferably about 100 nanometers.

Blended Polymer Solution Preparation

A blended polymer solution, to be used in formation of the polymer coating, is prepared by mixing a pore-forming polymer component and a structural polymer component. The structural polymer component can be more hydrophilic than the pore-forming polymer component. The structural polymer component and the pore-forming polymer component can be dissolved in a solvent such as hexafluoroisopropanol (HFIP) or tetrahydrofuran (THF).

The structural polymer component can include a first polymer and a second polymer. The first polymer can be more hydrophilic than the second polymer. The first polymer and the second polymer can comprise a same polymer having differing molecular weights.

The pore-forming polymer component can include a vinyl aromatic resin such as polystyrene (PS). When the pore-forming polymer component includes PS, the structural polymer component can include PMMA.

The vinyl aromatic resin can include a polymer that contains at least 25% by weight of structural units derived from a monomer of the formula (4):

$(Z)_p$-Ph-C($R^3$)$CH_2$ (4)

wherein Ph is phenyl, $R^3$ is hydrogen, lower alkyl or halogen, Z is vinyl, halogen or lower alkyl and p is 0 to 5. These vinyl aromatic polymers include homopolystyrene, polychlorostyrene, polyvinyltoluene, and rubber modified polystyrene (sometimes referred to as "HIPS") comprising blends and grafts with elastomeric polymers, as well as mixtures of these materials. Styrene-containing copolymers such as styrene-acrylonitrile copolymers (SAN), styrene-maleic anhydride copolymers, polyalpha-methylstyrene and copolymers of ethylvinylbenzene, divinylbenzene are also suitable.

The pore-forming polymer component can include PMMA. When the pore-forming polymer component includes PMMA, the structural polymer component can include nylon 6,6.

Spincoating

Conditions for a spin-up step prior to spincoating the blended polymer solution on the multi-scalar texture can include RPMs in a range of 100 to 1,000 for period of time in a range of 1 to 5 seconds, followed by RPMs in a range

of 1,000 to 6,000 a for period of time in a range of 5 to 180 seconds. The spincast polymer coating can cover all surfaces of the multi-scalar texture. Spincoating from a solution state onto a multi-scalar texture provides a porous, coated surface of the substrate between features of the multi-scalar texture and porous, coated sidewalls of the multi-scalar texture. The precise surface area increase provided by the spincast polymer coating can be dependent on the extent to which the surface of the multi-scalar texture is covered with porous material. For example, only a flat coating can be deposited on the topmost surfaces of the multi-scalar texture, and the topmost surfaces of the multi-scalar texture are not rendered porous.

As used herein, "topmost surfaces" refers to surfaces of protruding features of the multi-scalar texture farthest from the exposed surface of the substrate between features of the multi-scalar texture. See FIG. 1A, which shows a schematic layout of a porous coating 10 cast on a substrate covered with a multi-scalar texture 11 including pillars 12. FIG. 1B shows a topmost surface 13 and a surface 14 of the substrate between features of the multi-scalar texture.

The multi-scalar texture can affect the thickness of a spincast coating. The coating can be thinner over the topmost surfaces of protruding features of the multi-scalar texture and thicker along a surface of the substrate between features of the multi-scalar texture. The thickness along the surface of the substrate between features of the multi-scalar texture can be directly manipulated by exploiting 2-dimensional (2-D) capillary rise, which is induced by a multi-scalar texture including relatively closely-spaced, high surface energy features such as gratings and pillars. The capillary rise effect can thicken spincast coatings between features of the multi-scalar texture with little or no change to the pore (domain) size, e.g., diameter, relative to the native thickness and pore (domain) size, e.g., diameter, of the coating as-cast on a flat substrate.

FIG. 2 shows a schematic of capillary rise in a simplified 1-D case (cross-sectional tubes) to illustrate how the spincast coating is thickened between features of a multi-scalar texture while in solution. Capillary rise (coating thickness) is dependent on the Young's equilibrium contact angle of the capillary sidewall with the casting solution, as well as the separation distance between sidewalls.

Capillary rise above the reservoir level is achieved when the fluid wets the tube walls, and the ideal Young's contact angle for a flat surface is $\theta < 90°$ so that $\cos\theta > 0$. The capillary rise height is then modulated by narrowing or widening the tube radius (r).

As the capillary sidewalls are brought closer together, the rise height increases and vice-versa, which is beneficial when spincoating polymer blend solutions, from which relatively small pores and high pore density can be achieved and the cast coatings can be in the range of about 70-110 nanometers (nm). Coatings produced can be relatively thin. Relatively thicker coatings can yield relatively larger domain sizes, which decrease the total surface area of the coating when converted to pores. For example, when casting by spincoating, decreasing the spin speed will result in a thicker coating, and will lengthen the drying time, which allows more time for the polymer blend solution to phase segregate prior to gelation.

Casting against relatively dense high surface-energy features of the multi-scalar texture may not involve adjusting the spin speed and may not modify the composition of the polymer blend solution. The pore (domain) size, e.g., diameter, may be not changed by capillary rise, and more buried pores can be formed within the thickened portion of the coating. 2-D capillary rise can contribute directly to total surface area and improved wetting by increasing the density of buried pore networks.

## Dissolution of the Pore-Forming Polymer Component

Upon spincoating, both the pore-forming polymer component and the structural polymer component form a flat solid coating but are partially phase segregated within the flat solid coating. The coating can be then immersed in a solvent bath for selectively dissolving the pore-forming polymer component for a period of time in a range of about 1 to 3 minutes. The difference in hydrophilicity between the structural polymer component and the pore-forming polymer component allows for selective dissolution of the pore-forming polymer component in a solvent such cyclohexane or acetone. The solvent for selective dissolution of the pore-forming polymer component can have a chemical structure that is more similar to that of the pore-forming polymer and less similar to that of the structural polymer. Following immersion in the solvent bath, the coating can be rinsed in, for example, ethanol or isopropanol, and blow-dried with an inert gas such as nitrogen.

With further reference to FIG. 1A, FIG. 1A shows a schematic layout comparing a porous PMMA coating 10 cast on a flat substrate 15 with that cast on a substrate covered with a multi-scalar texture 11 including pillars 12 to form a superhydrophilic surface. Both total surface area and porous coating thickness along an exposed surface of the substrate between features of the multi-scalar texture increase due to, for example, 2-D capillary rise. Wetting performance is thereby enhanced. Since the multi-scalar texture is protruding, it can also be used to protect underlying portions of the porous coating to maintain superhydrophilic wetting behavior after solid-body contact or wear.

FIG. 1B also shows a cross-section view of an individual pillar showing how the porous coating meniscus 17 falls off the pillar, which has a residual coating 16 on sidewalls thereof. With reference to Table 1, a multi-scalar texture

including pillars and a multi-scalar texture including gratings were employed. For gratings, the capillary rise effect occurs between the grating walls which act as parallel plates across which a raised meniscus forms. Pores then form on the meniscus and along the sidewalls of the grating and buried pores form within the thickened PMMA coating along a surface of the substrate between features of the multi-scalar texture.

The incorporation of a multi-scalar texture can serve as a means to shield underlying portions of a fragile porous coating from solid-body contact from the external environment. A multi-scalar texture is a means of gaining some protection and is formed in the target superhydrophilic surface itself, as opposed to a wholly separate assembly that can be more bulky, complex, and expensive.

A contact angle of water with the porous polymer coating can be in a range of 0° to 10° after an elapsed time in a range of 0 to 30 seconds. A pillar array can exhibit isotropic superhydrophilic wetting performance (contact angle < 10°), and a grating array can be anisotropic (e.g., contact angle < 10° in the direction of the grating, when viewed perpendicular to that direction).

The porous polymer coating can cover all external surfaces of the multi-scalar texture as well as any exposed surface of the substrate between features of the multi-scalar texture. The porous polymer coating can increase the surface area of the multi-scalar texture. The porous polymer coating, if cast from a solution, can exhibit 2-D capillary rise, which can further enhance accessible surface area, for example, through formation of additional buried pore networks within portions of the coating between features of the multi-scalar texture where the 2-D capillary rise effect can enhance coating thickness.

This disclosure is further illustrated by the following examples, which are non-limiting.

EXAMPLES

Substrate Preparation

Silicon substrates were textured via deep ultraviolet (UV) photolithography to form a multi-scalar texture, including 0.5 micrometers ($\mu$m), 1 $\mu$m, and 2 $\mu$m diameter grating, hole, and pillar arrays for a total of nine arrays. The etch depth of all arrays was 2 $\mu$m. The pitch of all structures was twice the diameter of the structures. The pillar array layout was hexagonal. The textured field area was approximately 0.5 centimeters (cm) x 0.5 cm. The total area of the silicon substrate was 2 cm x 2 cm. Pillar arrays exhibited isotropic superhydrophilic wetting performance (contact angle < 10°), and grating arrays were anisotropic (e.g., contact angle < 10° in the direction of the grating, when viewed perpendicular to that direction).

In the Examples described herein, the silicon substrates including a multi-scalar texture were used as a mold to hot-emboss nylon 6 bulk coatings at 220°C, at 20 bars (2 megapascals) pressure for 5 minutes. The hot-embossed multi-scalar texture fabricated on nylon 6 was directly formed against silicon molds, hole arrays on silicon became pillar arrays on nylon 6, and the new pillar arrays were accordingly studied on the nylon 6 substrate.

Blended Polymer Solution Preparation

PMMA:PS blends were prepared from 120,000 molecular weight (Mw) PMMA powder and 280,000 Mw polystyrene (PS) pellets used as-received from Sigma-Aldrich. The PMMA had a Young's angle of about 71°. Polystyrene is more hydrophobic than PMMA and is immiscible in PMMA, making it possible to re-dissolve the PS in a selective solvent such as cyclohexane. PS:PMMA ratios of 10:90%, 20:80%, 30:70%, 40:60%, and 50:50% by weight were tested. A PS content of 10% by weight resulted in relatively fewer pores, and a PS content of 20% by weight resulted in phase segregation into ribbons of PS, which decreased total surface area. Accordingly, it was determined that a PS:PMMA ratio of 15:85% by weight provided the densest porous coating on flat surfaces, and in the subsequent Examples, a total polymer loading of 2 weight % was used, of which 15% by weight was PS and 85% by weight was PMMA. The polymer blend was dissolved in tetrahydrofuran (THF), which is a relatively low boiling point solvent (boiling point 66°C) able to dissolve both PMMA and PS.

Spincoating & Dissolution of Polystyrene

Spincoating was carried out with 400 revolutions per minute (RPM) spin-up for 2 seconds, followed by 3,000 RPM for 30 seconds to form the PMMA:PS coating. The same spincoating process was used regardless of the nature or material composition of the substrate including a multi-scalar texture. The nylon 6 coating substrates were treated with oxygen plasma immediately prior to spincoating to increase the surface energy of the nylon 6 coating substrate to aid in the blended THF solution properly wetting the nylon 6 coating substrate for spincoating and improved coating adherence. The plasma treatment parameters were the same as those provided below for descumming the porous PMMA surface after dissolution of the PS phase. The spin speed was kept relatively high to speed evaporation of the

solvent so that there was insufficient time for the PS to entirely phase separate into a contiguous layer out of the blend. The coatings were then baked at about 70°C to remove residual solvent. The coatings were then immersed in a cyclohexane bath for 1 minute to dissolve the PS component, followed by rinsing in ethanol and blow-drying with a nitrogen gas gun.

Oxygen Plasma Descum

To remove solvent residues and other hydrophobic contaminants, the porous PMMA-coated multi-scalar texture was exposed to a low power oxygen plasma descum treatment in a reactive ion etch (RIE) chamber at 20 watts (W) forward power, at 40 millitorrs (mTorr) (5.33 pascals) pressure, 20 standard cubic centimeter per minute (sccm) $O_2$ for 1 minute. A low forward power setting minimized etch rate, leaving behind a bare, oxidized porous PMMA coating.

Contact Angle Measurements

Static water contact angle goniometry was carried out on the above-fabricated porous PMMA-coated multi-scalar texture immediately after oxygen plasma descum treatment. Water contact angle measurements were carried out in a standard laboratory environment with no special environmental controls. A 3 microliter ($\mu$L) droplet size was used as the standard volume for measurement. Droplet images with measured angles were captured in real-time as they were deposited on the surface - contact angle measurements were made within about 2 seconds of deposition upon removal of the dispense needle. The contact angle of the deposited water droplet continued to decrease rapidly after deposition as the droplet wetted through the porous coating. Some measurements were taken after stabilization, which typically occurred about 5-10 seconds after droplet deposition, for example, if the stabilized contact angle was < 10° and exhibited superhydrophilicity.

Scanning Electron Microscope Measurements

Scanning electron microscopy was carried out using a JEOL JSM 7600F and a Tescan VEGA3 SB. Samples were coated with gold-palladium alloy to render the surfaces conductive.

Results

FIG. 3 shows a reference sample and image for comparison with samples which incorporate a multi-scalar texture. FIG. 3A shows a scanning electron microscope (SEM) overhead view of a porous PMMA cast coating on a flat silicon substrate following the above fabrication protocol. The porous coating was engineered to maximize pore density and leave a contiguous, intact PMMA matrix surrounding the pores. Water contact angle measurements approached the superhydrophilic threshold at 25 ± 1.2°. FIG. 3B shows an image of a spincast sample. FIG. 3C shows a water contact angle image derived from the sample after following the above fabrication and analysis protocols. Off-center measurements yielded an average contact angle of 25 ± 1.2°.

FIG. 4 shows sample views of the silicon substrate including a multi-scalar texture and nylon 6 including a multi-scalar texture with the porous PMMA coating cast on top. The porous PMMA coating was translucent. The porous PMMA coating was also visually evidenced by the interference fringing at the corners. Flat nylon 6 bulk coating samples (FIG. 4B) were hot-embossed using the silicon substrate including a multi-scalar texture (FIG. 4A) as a mold. In FIG. 4A, the multi-scalar texture of the top row included gratings, the middle row included holes, and the bottom row included pillars. In FIG. 4B, the multi-scalar texture of the top row included gratings, the middle row included pillars, and the bottom row included holes. The bottom left corner mold shown in FIG. 4A had accumulated defects along the pillar arrays thereof from use in other hot embossing work. For all pillar arrays there was enough defect-free textured area to conduct proper water contact angle analysis.

As used herein, the term "translucent" means having a haze of more than 1%, or more than 5%, or more than 10%, or more than 15%, but less than 100% (i.e., more than 0% transmission), measured according to ASTM D1003-00 using the color space CIE1931 (Illuminant C and a 2° observer) at a sample thickness of 2.5 mm. Translucency means the object in question allows light to pass through, but the object can introduce haze or cloudiness to the visualization of the scene behind the object.

FIG. 5 shows SEM images of porous PMMA coating cast on gratings of 0.5 $\mu$m (FIG. 5A and FIG. 5B), 1 $\mu$m (FIG. 5C and FIG. 5D), and 2 $\mu$m (FIG. 5E and FIG. 5F) linewidth. FIG. 5A, FIG. 5C, and 3e show direct overhead views and FIG. FIG. 5B, FIG. 5D, and FIG. 5F shows 40° angle views. The at-angle views show the porous coating covering a surface of the substrate between features of the multi-scalar texture and sidewalls of the silicon grating and topmost surfaces of the grating lines remaining free of pores. Most of the additional surface area provided by the grating multi-scalar texture was covered with a porous coating. The top surface of the grating lines was covered by a thin layer of

roughened PMMA. Without wishing to be bound by any theory, it is understood that PS almost completely phase segregates into a contiguous layer at the polymer/air interface along the top of the lines. The depth of all grating structures was 2 μm, and on/off ratio was 1:1.

For the 0.5 μm grating, the gap between lines was too small to discern the sidewalls mid-line, and a textured field edge was chosen in which staggered line breaks allowed viewing of the coating meniscus between lines. For all linewidths tested, some deep micrometer-scale pores (e.g., having a diameter of 1 to 100 μm) appear amongst the pores. Without wishing to be bound by any theory, it is understood that this is caused by additional phase segregation from lengthening drying times as the capillary rise effect thickens the coating between lines.

The longest drying time was for the 0.5 μm grating, in which the meniscus height ($t_m$) of the porous PMMA coating was measured in cross-section SEM at 1.5 μm. The meniscus height ($t_m$) is equal to a shortest distance from the surface of the substrate between features of the multi-scalar texture to an opposite or outer side of the meniscus, in a direction perpendicular to the surface of the substrate between features of the multi-scalar texture (see FIG. 1B). The meniscus sidewall height ($t_s$) of the porous PMMA coating was measured in cross-section SEM at 1.8 μm. The meniscus sidewall height ($t_s$) is equal to a farthest distance from the surface of the substrate between features of the multi-scalar texture to which the meniscus extends, in the direction perpendicular to the surface of the substrate between features of the multi-scalar texture (see FIG. 1B). A thickness ratio ($(t_m+t_s)/2t_{flat}$) was calculated as an average of the meniscus height ($t_m$) and the meniscus sidewall height ($t_s$) (e.g., $(t_m+t_s)/2 = (1.5 + 1.8)/2 = 1.65$ for the 0.5 μm grating) divided by a thickness of a porous PMMA coating having the same composition, cast in the same manner, on a flat substrate ($2t_{flat}$; see FIG. 1A and FIG. 3) (i.e., 0.1 μm), and for the 0.5 μm grating was 16.5 (see Table 1). Phase segregation was greatest with the 0.5 μm grating. Portions of the coating along the spaces between lines remained porous.

Table 1

| Multi-Scalar Texture | Surface Area Ratio ($r/r_0$) | Meniscus Height (μm) | Meniscus Sidewall Height (μm) | Thickness Ratio |
|---|---|---|---|---|
| 0.5 μm grating | 3 | 1.5 | 1.8 | 16.5 |
| 1 μm grating | 2 | 0.75 | 1 | 8.75 |
| 2 μm grating | 1.5 | 0.6 | 0.9 | 7.5 |
| 0.5 μm pillars | 4.62 | 0.65 | 0.8 | 7.3 |
| 1 μm pillars | 2.81 | 0.5 | 0.6 | 5.5 |

Table 1 provides characteristics of porous PMMA coatings that were spincast from 3% polystyrene (PS):PMMA blend solutions in THF on a multi-scalar texture, after which the PS component was removed by immersion in a cyclohexane bath for 1 minute. The diameter of individual features of the multi-scalar texture is provided with the multi-scalar texture. The height of each multi-scalar texture was 2 μm. The Meniscus Height was measured from nylon 6 SEM cross-section at the mid-point. The Meniscus Sidewall Height was measured from nylon 6 SEM cross-section along sidewall edge. The Thickness Ratio is the ratio of the average meniscus height to the thickness of a coating cast on a flat nylon 6 substrate (about 100 nm).

The average pore diameter of the porous PMMA coating ranged from approximately 100-500 nanometers (nm) for all gratings tested. This range is similar to that obtained with flat coatings (FIG. 3).

FIG. 6 shows SEM micrographs of 0.5 μm (FIG. 6A and FIG. 6B) and 1 μm (FIG. 6C and FIG. 6D) pillar arrays with the applied porous PMMA coating applied. FIG. 6A and FIG. 6C provide overhead views of both pillar arrays and FIG. 6B and FIG. 6D provide 40° angled views. The porous PMMA coating climbed partially up the sidewalls of the pillars. A portion of the sidewall along with topmost surfaces of the pillars were covered with non-porous PMMA. Although the 2-D capillary rise effect was lessened with pillar arrays (*i.e.,* discontinuous structures), partial skinning was observed with the 0.5 μm pillar array, in which a complete coating was formed between various groups of pillars.

Without wishing to be bound by any theory, it is understood that a combination of relatively high 2-D spatial density and native oxide surface composition of the pillar array attracted PMMA due to the polar -COOH groups including PMMA. Partial skinning may have been caused by proximity effects combined with the inhibited drying conditions on the surface of the 0.5 μm pillar array, leading to additional phase segregation. In any case, the extent of phase segregation for the coating as a whole remained low, due to, for example, buried pore networks immediately beneath the skinned regions. For the 1 μm pillar array, the pillar density was decreased, and skinning was not observed. The pore shape was distorted, lengthening between nearest neighbor pillars. Both pillar arrays exhibited superhydrophilic wetting performance.

FIG. 7 shows SEM micrographs showing the 2-D capillary rise effect that occurred with the incorporation of a

multi-scalar texture. All SEM images were captured at a textured field edge to show how the porous PMMA coating was taken up by each multi-scalar texture. FIG. 7A shows the 0.5 μm grating with staggered lines, FIG. 7B shows the 1 μm pillar array, and FIG. 7C and FIG. 7D shows the 0.5 μm pillar array at different angles.

Table 2 provides the contact angle goniometry results derived from the porous PMMA-coated surfaces discussed above. All grating structures exhibited superhydrophilic performance along the direction of the grating. Grating structure arrays may exhibit a continuous water film along the entire array if sufficient droplets are deposited on the textured field to wet all the lines and thereby overcome the inherent resistance to lateral motion against the grain of the grating. Capillary action along superhydrophilic gratings can assist with wetting. The contact angle when viewed perpendicular to the grating direction may be approximately zero, or so low that it is not measurable. For pillar arrays, the 0.5 μm pillar array exhibited superhydrophilic performance immediately and the contact angle continued to decline to < 9° after 5 seconds of soaking. For the 1 μm pillar array, superhydrophilic wetting was exhibited after 5 seconds of soaking. The 2 μm pillar array result shows the transition from superhydrophilic to hydrophilic wetting. FIG. 8 shows the contact angle goniometry images corresponding to the data provided in Table 2. The recorded pillar values were immediately after droplet deposition, and a secondary measurement was taken after allowing 5 seconds for the droplet to soak into the porous PMMA coating.

Table 2

| Feature Diameter | Gratings (perpendicular view) | Pillars |
|---|---|---|
| 0.5 μm | ~0° | 9.7 ± 0.4°, < 9° after ~10 seconds |
| 1 μm | ~0° | 14 ± 1.1°, < 10° after ~10 seconds |
| 2 μm | ~0° | 21 ± 2.1°, < 19° after ~10 seconds |

0.5 μL droplets deposited on surfaces with pillars exhibited a rapid secondary decline in contact angle after initial deposition. Without wishing to be bound by any theory, it is understood that the secondary decline occurs due to the filling of buried pores in the coating with water as well as further spreading of the droplet across the external surface, indicating that buried pore networks may influence the final contact angle of the water droplet, with a delay.

Table 3 details the contact angle goniometry results derived from the porous PMMA-coated, hot-embossed nylon 6 grating and pillar structures discussed above and processed according to the experimental protocol disclosed above. All grating structures exhibited superhydrophilic performance along the direction of the grating as was exhibited with corresponding gratings on silicon. In terms of porous PMMA cast on pillar structures, the 0.5 μm diameter array exhibited superhydrophilic performance after soaking for about 10 seconds after droplet deposition. The secondary decline in contact angle after droplet deposition (which, without wishing to be bound by any theory, can be attributed to soaking, or the filling of buried pore networks as well as further spreading of the deposited droplet) played a role in obtaining superhydrophilic wetting for surfaces including pillar arrays.

The differentiation between superhydrophilic and hydrophilic behavior occurred with the 1 μm diameter pillar array, which exhibited a contact angle of 27°. The highest density pillar array maintained superhydrophilic wetting. FIG. 9 shows corresponding goniometer camera images for the quantitative results provided in Table 3. For all structure types tested, overall wetting performance improved over porous PMMA coatings cast on flat substrates (about 25° versus about 0-14°, where values for gratings are as-viewed perpendicular to the grating direction). The lone exception was the 1 μm diameter pillar array in which wetting performance was relatively unchanged. Here the contact angle on 1 μm pillars defines the transition from superhydrophilic to hydrophilic wetting. The recorded pillar values were immediately after droplet deposition, and a secondary measurement was taken after allowing 10 seconds for the droplet to soak into the porous PMMA coating.

Table 3

| Feature Diameter | Gratings (perpendicular view) | Pillars |
|---|---|---|
| 0.5 μm | ~0° | 14 ± 2.3°, < 10° after ~ 10 seconds |
| 1 μm | ~0° | 27 ± 1.1°, < 20° after ~10 seconds |
| 2 μm | ~0° | - |

Contact angle measurements of coating layers including multiple combinations of 120,000 (120k) and 15,000 (15k) Mw PMMA were measured after 15 seconds of soaking time. Three-component 280,000 (280k):(15,000:120,000) PS:(PMMA) blended polymer solutions were formulated and cast on flat silicon substrates, followed by PS dissolution

as described above to form porous PMMA coatings. Coatings were cast from 2 weight % PS:PMMA blend solutions in THF. Water contact angle analysis was carried out after a 30 second $O_2$ oxygen plasma descum treatment. Measurements were made with sessile water droplets after 16 seconds equilibration time. The results are presented in Table 4.

Table 4

| | 15:85% 280k: 120k PS: PMMA Reference (FIG.10A) | 15:(20:80) % 280k:(15k: 120k) PS: PMMA (FIG. 10B) | 15:(40:60) % 280k:(15k:120k) PS: PMMA (FIG. 10C) | 15:(60:40) % 280k:(15k: 120k) PS: PMMA (FIG. 10D) | 15:(80:20) % 280k:(15k: 120k) PS: PMMA (FIG. 10E) | 15:85% 280k: 15k PS:PMMA Reference (FIG.10F) |
|---|---|---|---|---|---|---|
| Pristine Contact Angle (°) | 110.7 ± 0.53 | - | 106.7 ± 0.17 | - | - | 108.5 ± 1.4 |
| Test Contact Angle (°) | 33.7 ± 2.3 | 18.6 ± 0.9 | 12.9 ± 2.8 | 19.8 ± 1.9 | 37.7 ± 4 | 38.1 ± 4.4 |

The test contact angle was measured after 30 second oxygen plasma descum. Lowest contact angle corresponds to best wetting performance. The lowest measured test contact angle of 12.9 ± 2.8° occurred with a 40% fraction of Mw 15k of the 85% total fraction of PMMA. The 12.9 ± 2.8° near-superhydrophilic contact angle value exhibited especially strong wetting for a polymer surface without a multi-scalar texture and may be attributed to increased pore formation in the bulk of the porous PMMA coating, given that surface porosity actually decreased relative to 15:85%, 280:120k PS:PMMA coatings. Other Mw 15k PMMA substitution fractions also yielded decreased contact angle values compared to reference samples with the pure 15,000 Mw reference having the largest contact angle, which is consistent with the smallest contact angle with a 15,000 Mw fraction of <50%. Pristine contact angles were also measured prior to the 30 second oxygen plasma descum treatment for the reference coating samples and the best-performing 15:(40:60)% PS:PMMA sample to show the wetting performance contrast with post- descum treated contact angles.

FIG. 10 provides SEM overhead images of cast porous PMMA coatings corresponding to the contact angle results in Table 4. FIG. 10 shows that surface porosity remains stable even as the relative fraction of 120,000 Mw PMMA was decreased to 20%. The average surface pore density decreases as the fraction of 15,000 Mw PMMA increases from zero to 40%, and the average pore size, e.g., diameter, increases as the same fraction increases from 60-80%. Loss in total surface area at the air interface is offset by gains in the bulk of the coating as indicated by contact angle performance.

Blended polymer solutions including nylon 6,6 as the primary component, with 120,000 Mw PMMA as the pore-forming component in hexafluoroisopropanol (HFIP) were tested. The coating cast from this blended polymer solution is nanoporous, yet transparent, after the 120,000 Mw PMMA is removed. Pore diameters of less than 100 nanometers yielded a negligible light-scattering cross-section and the resulting transparency.

PMMA:nylon 6,6 blends were prepared from 120,000 Mw PMMA powder and nylon 6,6 pellets supplied by SABIC. Nylon 6,6 coatings can be more hydrophilic than PMMA (Young's angle on flat surface of about 68° versus about 71° for PMMA). Nylon 6,6 pellets and PMMA powder were both dissolved in HFIP (boiling point 58°C) to an overall concentration of 0.5% wt., of which 20% by weight was PMMA and 80% by weight was nylon 6,6.

SU-8 epoxy-based negative photoresist was used as the material carrying the multi-scalar texture. SU-8 3004 from MicroChem Corp. was spincast on oxygen plasma treated square glass slides at 3,000 RPM and soft baked at 60°C on a hotplate for 5 minutes. The SU-8 samples were then hot-embossed against the silicon mold including a multi-scalar texture described above using a NX-2000 nanoimprinting tool at 90°C under 20 bars 2 (megapascals) pressure for 3 minutes, followed by 5 minutes 365 nm i-line UV-light emitting diode (LED) exposure to cure the SU-8 under the same temperature and pressure. Prior to demolding the samples were hard baked by ramping to 200°C in a convection oven to fully cross-link the SU-8 against the mold. Demolding reveals arrays of 0.5 μm, 1 μm, and 2 μm diameter gratings and pillars in hard baked SU-8 on glass (all feature depths are 2 μm). Reference SU-8 hard baked flat coatings were also prepared by following the same processing steps as described above, but with a silicon wafer chip in place of a textured mold.

The PMMA:nylon 6,6 blended polymer solution was cast on both flat reference and SU-8 samples including a multi-scalar texture at 400 RPM spin-up for 2 seconds, followed by 3,000 RPM for 30 seconds to form the PMMA:nylon 6,6 coating. HFIP has a relatively low boiling temperature and evaporates relatively quickly - combined with a relatively high spin speed, the coating is able to dry out quickly enough to prevent phase segregation of the blend components into contiguous layers. The cast coatings were then baked at 70°C to remove residual solvent. The glass / SU-8 /

PMMA:nylon 6,6 samples were then immersed in a warm acetone bath (50°C on hotplate, under agitation) for 5 minutes to dissolve the 120,000 Mw PMMA component, followed by rinsing in isopropanol and blow drying with a nitrogen gas gun.

A cured resist film is used to form the substrate including a multi-scalar texture. The multi-scalar texture was capable of withstanding aggressive solvent attack from both HFIP and acetone exposure. Both such solvents can attack or dissolve a broad range of thermoplastic polymers. A cross-linked resist was chosen to ensure multi-scalar texture survivability.

A coating cast from a solution blend employing nylon 6,6 as the primary component, with 120,000 Mw PMMA as the pore-forming component in HFIP was porous, yet transparent, after the 120,000 Mw PMMA was removed. FIG. 11 shows a comparison of examples of a porous PMMA coating (FIG. 11A, 15:85% 280,000:120,000 Mw PS:PMMA coating on glass) and a nanoporous nylon 6,6 coating (FIG. 11B, 20:80% PMMA:nylon 6,6), in which an improvement in transparency is shown.

PMMA:nylon 6,6 solution blends coatings were cast onto flat SU-8 coatings and processed to provide a reference for comparison to similar coatings cast on SU-8 including a multi-scalar texture, and observe differences in the pore conformation. FIG. 12A and FIG. 12B show SEM images of the coating conformation at different viewing angles.

The length of the scale bar shown in FIG. 12A and 12B is equal is 1 μm. The coating conformation is that of a branched fractal pore network surrounding protruding nodules, in which the average pore diameter is less than 100 nm. Water is miscible in HFIP, condensation can occur on the sample surface during spincoating from water vapor in the laboratory ambient, and it is expected that the coating conformation is determined by both the drying behavior of both the PMMA:Nylon 6,6 blend as well as residual water during the spincoating process.

The conformation of nanoporous nylon 6,6 coatings cast on structured SU-8 surfaces is provided by SEM imaging in FIG. 13, at various locations across a 2 μm grating array. The conformation of the visible pore network was the same for all grating types, as the grating diameter and spacing dimensions did not approach the average pore diameter of the coating. As shown in all four images of FIG. 13 (FIG. 13A, grating edge (overhead); FIG. 13B, grating edge (40° angle); FIG. 13C, opposite grating edge (overhead); and FIG. 13D, grating trenches (overhead)), the nanoporous coating conformation was unaffected along a surface of the substrate between features of the multi-scalar texture, as compared to the flat SU-8 reference sample in FIG. 12A (40° angle) and FIG. 12B (overhead). The nanoporous coating can also be seen to climb the sidewalls of the grating lines. Only the topmost surfaces of the grating lines exhibit phase segregation into a contiguous layer of nylon 6,6. At the textured field edge, the presence of lines can induce phase segregation, as the nanoporous coating conformation can resume when the grating lines transition to flat, featureless SU-8, which is similar to behavior observed with porous PMMA coatings on silicon and nylon 6 textured substrates. The average PMMA pore size was much closer to the dimensions of the features of the multi-scalar texture tested, and the PMMA pore conformation did change depending on the nature of the underlying multi-scalar texture. In the case of nanoporous nylon 6,6, the pore size was approximately an order of magnitude or more smaller than the features of the multi-scalar texture. The pore diameter and conformation of the nylon 6,6 nanoporous coating can reduce or eliminate light scattering.

FIG. 14A and FIG. 14B provide SEM micrographs of nanoporous nylon 6,6 coatings cast on SU-8 2 μm pillar fields. The basic conformation of surface pores in the coatings was undisturbed by the multi-scalar texture when compared with the reference conformation on flat SU-8/glass (FIG. 12A and FIG. 12B). With the 2 μm pillars, the pore network did not climb the entirety of the pillar sidewalls. The porosity extended only about 500 nm from the surface of the substrate between the pillars. With gratings, the pore network can climb the entirety of the sidewall, which can help explain differences in wetting performance between pillars and gratings.

FIG. 14A shows a 40° angle view of the pore network not disturbed along the surface of the substrate between pillars (in comparison to reference coatings on flat SU-8) and FIG. 14B shows a zoomed view showing an approximately 500 nm climb of the porous network up the pillar sidewalls (arrow overlay).

The wetting performance of composite surfaces generated from nanoporous nylon 6,6 coatings cast on SU-8 including a multi-scalar texture was evaluated quantitatively. Contact angle goniometry was carried out by the sessile drop method on textured 0.5, 1, and 2 μm diameter grating and pillar arrays as described above, following oxygen plasma descum treatment. Table 5 lists the contact angle measurements recorded after the initial approximate 4 second spreading phase during which the pores underlying the droplet are filled. Also listed are the standard deviation, and if applicable, the complete absorption time with standard deviation. For nanoporous nylon 6,6 coatings on flat SU-8, the contact angle was recorded as 18 ± 1.5°, which is relatively strongly hydrophilic and sufficient for obtaining superhydrophilic performance when cast on a multi-scalar texture. Both gratings and pillars exhibited superhydrophilic contact angles. For example, after casting the nylon 6,6 nanoporous coating, pillar and grating arrays obtained superhydrophilic performance with contact angle < 10°.

For gratings, the contact angle was viewed by goniometer camera perpendicular to the direction of the grating in similar fashion to measurements conducted on porous PMMA coatings cast on grating arrays. The droplet wets anisotropically into a line over a segment of the grating array. For measurements on all gratings, the droplet spreads beyond the goniometer camera's field of view to the textured field edge, and an air-water-solid contact angle measurement

is not provided because the textured field edge discontinues the grating and is not a representative solid surface from which to derive a contact angle. To give a measure of the change in droplet wetting with time, software-measured curvature angle of the middle of the droplet (where edge effects are minimal) is provided where the droplet is allowed to extend off the viewing edge of the camera.

Similar to that of porous PMMA samples, the contact angle on nanoporous nylon 6,6 gratings achieves a near-zero superhydrophilic contact angle instantaneously. There is no two-phase spreading behavior on 1-D gratings in contrast to that found on flat coatings and discrete featured arrays (pillars). Without wishing to be bound by any theory, it is understood that this is due both to the conformation of the porous coating, which covers both the sidewalls and the trenches between grating lines, as well as 2-D capillarity along the grating which draws the water into a flat line across the textured field. This combination may strongly abet wetting.

Pillar arrays obtain larger initial contact angles and are superhydrophilic (e.g., contact angle < 10°). One 3 μL droplet is sufficient to wet the entire 5 mm x 5 mm array. Pillar arrays with cast nanoporous nylon 6,6 coatings exhibited the most interesting 2-phase spreading behavior in that the droplet will be fully absorbed by the target surface in the 2nd phase of spreading within a range of about 22-32 seconds with 1 μm gratings having the fastest absorption time. The complete absorption time is defined as the time elapsed from droplet deposition to the droplet becoming indistinguishable from the solid surface as viewed laterally from the goniometer camera.

For the nanoporous nylon 6,6 coatings, all pillar designs tested exhibited superhydrophilic wetting, which was a dramatic improvement over prior results derived from porous PMMA coated samples.

Table 5

| SU-8 Multi-Scalar Texture | Initial Contact Angle (°) | Standard Deviation (°) | Wetting Time (seconds) | Standard Deviation (seconds) |
|---|---|---|---|---|
| Flat | 18 | 1.5 | - | - |
| 500 nm Grating | 0.8 | 0.3 | Instantaneous | - |
| 1 μm Grating | 0.6 | 0.3 | Instantaneous | - |
| 2 μm Grating | 0.4 | 0.1 | Instantaneous | - |
| 500 nm Pillars | 8 | 1.4 | 31 | 4 |
| 1 μm Pillars | 7 | 0.9 | 22 | 3 |
| 2 μm Pillars | 7 | 1.4 | 32 | 7 |

The identity of the multi-scalar texture and diameter of individual features of the multi-scalar texture is provided. The height of each multi-scalar texture is 2 μm. The standard deviation of the initial contact able is provided as a ± value around the initial average contact angle. The average wetting time is the time to complete absorption of the deposited sessile water droplet such that it becomes indistinguishable from the solid surface. The standard deviation of the wetting time is provided as a ± value around the average wetting time

Nanoporous nylon 6,6 coatings cast on six different SU-8 samples each including a multi-scalar texture obtained some form of superhydrophilic wetting performance. Additionally, forms of superhydrophilic wetting unique to thin porous coatings were observed, such as relatively high rates of spreading from an initial sub-10° contact angle into complete droplet absorption.

Transmission versus wavelength of a 1 mm thick pristine glass slide, which was the underlying substrate for all samples, was measured using UV-Visible spectrophotometry. The apparatus used works by diffuse white LED luminance through an aperture, then through a gap in which the sample is placed, and onwards to the detector. A sample was placed directly on a light source with glass backing contacting the aperture. The sample arrangement was made to allow light passing through a fog (or water) coating on the sample to scatter through the air gap before striking the detector, which is an effective way of indirectly measuring the density of surface fogging as inversely proportional to the measured transmission, where losses are isolated to scattering from the fog layer. Some losses due to light scattering, reflection and absorption can also occur with dry reference samples, as shown in the transmissivity versus wavelength graph in FIG. 15A (Transmission of Reference Surfaces), in which an empty reference (through air) is considered 100% transmission. For example, reference glass slides have an average transmission of around 90% with a relatively flat profile versus wavelength in the visible wavelength range. Additional layers tend to degrade the transmission mostly in the blue-violet, primarily due to absorption in the case of SU-8 and scattering/reflection with respect to the nanoporous (NP) nylon 6,6 coating and its interface with air. In FIG. 15, the transmission profile of pristine glass is provided as an ideal reference. Relative transparency is governed by how flat the transmission profile is and how close the transmission approaches that of the pristine glass reference.

The transmission of all flat, dry reference surfaces was within a range of about 82.5% to 92.5% and with a relatively flat, trendless profile over the visible wavelength range. When the samples were fogged (FIG. 15B, Transmission of Fogged Reference Surfaces), transmission was predominantly lost in the shorter wavelengths (green-blue-violet), but transmission actually increased in the longer wavelengths (yellow-red). Without wishing to be bound by any theory, it is understood that the fog droplets preferentially scattered narrow over longer wavelengths. Narrow wavelengths can interact with and scatter across the droplet edges on hydrophilic surfaces as well as the solid-air-liquid gap at droplet edges on hydrophobic surfaces. Longer wavelengths do not interact with droplet edges where relevant dimensions are significantly smaller than the wavelength(s) in question. If the light source is poorly collimated for longer wavelength light in the reference configuration, the fog layer can extract relatively more light that would otherwise scatter and redirect it into the detector. The action of both of these factors results in a slight improvement in transmission over pristine glass reference. From this data it can be concluded that transparency can be defined as a near-100% transmission with a flat transmission profile with respect to wavelength. As the fogging density increases, the transmission profile becomes more "S-shaped", with the haziest sample being the SU-8 reference. In contrast, a 20 second fogging exposure of a flat nanoporous nylon 6,6 sample forms a contiguous water film and improves the overall transmission over pristine glass reference, especially in the green-blue-violet wavelengths. The scattering/reflective losses at the air- nanoporous nylon 6,6 interface were reduced because the intermediate refractive index of water (n = 1.33) provides a graded index change for light passing through this interface.

When SU-8 including a multi-scalar texture was used in test samples, the effect was to scatter and diffract incident light as dry samples (see FIG. 16A, Transmission of Structured SU-8 Fields Coated with NP Nylon 6,6). The least dense features of the multi-scalar texture tended to scatter light the least (2 $\mu$m pillars), and the corresponding plotted curves were relatively flat and transmissive losses were minimized. As the feature diameter approached the visible wavelength range and feature density increases, the scattering increased, particularly with 500 nm and 1 $\mu$m diameter gratings and pillars in the blue-violet wavelength range. The transparency of most fields improved when textured SU-8 fields coated with nanoporous nylon 6,6 were fogged for 5 seconds such that they obtain contiguous water films (see FIG. 16B, Transmission of Fogged, Structured SU-8 Fields Coated with NP Nylon 6,6). For the 2 $\mu$m grating and pillar fields, transmission improved by 10 - 15 percentage points for narrow wavelengths, and between 5 and 20 percentage points depending on pattern type at longer wavelengths. For the flattest profile (2 $\mu$m grating), the transmission gap with pristine glass held relatively constant at 15 - 20%, which indicates that for a perfectly transmissive substrate, the transmission of this composite superhydrophilic surface in water would be 80 - 85%.

The index of refraction of water (n = 1.33) lies between that of air and nylon 6,6, thus setting up a graded interface with air. The features of the multi-scalar texture with the best transmission had diameters furthest from visible wavelengths and the lowest feature density (2 $\mu$m gratings, pillars).

Smaller diameter features of the multi-scalar texture also saw improvement in transmission, with the exception of 500 nm pillar fields. This was especially the case in the narrow wavelengths because while the structure diameter is similar to the wavelength, the index contrast between the gratings and water was reduced. As the structure-fluid index contrast was reduced, the scattering/diffraction effect of the structure itself was lost. The result is a flattening of the transmission curve versus wavelength for most structure types and dimensions, which is desirable as a measure of transparency.

To further improve the transparency of nanoporous nylon 6,6 coatings cast on surfaces including a multi-scalar texture, the refractive index of the features of the multi-scalar texture can be further reduced to approach that of water. The microstructure dimensions can be either increased or decreased away from visible wavelengths. For example, approximately 150 nm gratings or pillars could be used, and such small dimensions would not couple to visible light, which would greatly improve transparency so long as the nanoporous nylon 6,6 coating does not planarize the patterns. Larger feature diameters and reduced density would also result in improved transmission as visible light would not couple to such features and the reduced density would minimize scattering losses. There would be a trade-off between superhydrophilic performance and transparency.

This disclosure further encompasses the following aspects.

Aspect 1. An article comprising: a substrate comprising a multi-scalar texture, wherein the multi-scalar texture comprises features having at least one of a sidewall-to-sidewall spacing therebetween in a range of 0.001 micrometers to 1,000 micrometers, preferably 0.01 micrometers to 100 micrometers, more preferably 0.1 micrometers to 10 micrometers; a diameter in a range of 0.001 micrometers to 100 micrometers, preferably 0.01 micrometers to 100 micrometers, more preferably 0.1 micrometers to 10 micrometers; a height in a range of 0.001 micrometers to 100 micrometers, preferably 0.01 micrometers to 100 micrometers, more preferably 0.1 micrometers to 10 micrometers; and/or a pitch in a range of 0.001 micrometers to 1,000 micrometers, preferably 0.01 micrometers to 100 micrometers, more preferably 0.1 micrometers to 10 micrometers; and a porous polymer coating, wherein the porous polymer coating has an average pore diameter in a range of 1 nanometer to 100,000 nanometers, preferably 10 nanometers to 10,000 nanometers, more preferably 10 nanometers to 1,000 nanometers.

Aspect 2. The article according to Aspect 1, wherein the substrate comprises a hydrophilic polymer, preferably a polyamide, more preferably polycaprolactam.

Aspect 3. The article according to Aspect 1, wherein the substrate comprises silicon.

Aspect 4. The article according to any preceding aspect, wherein the porous polymer coating covers exposed surfaces of the substrate between features of the multi-scalar texture and all external surfaces of the multi-scalar texture.

Aspect 5. The article according to any preceding aspect, wherein the porous polymer coating has an average pore diameter of less than 100 nanometers.

Aspect 6. The article according to any preceding aspect, wherein the article is transparent.

Aspect 7. The article according to any preceding aspect, wherein the porous polymer coating exhibits 2-D capillary rise.

Aspect 8. The article according to any preceding aspect, wherein the porous polymer coating comprises a hydrophilic polymer, preferably an acrylate, a polyamide, or a polyimide, more preferably poly(methyl methacrylate) or poly[imino(1,6-dioxohexamethylene) iminohexamethylene] .

Aspect 9. The article according to any preceding aspect, wherein the multi-scalar texture comprises features having a sidewall-to-sidewall spacing therebetween in a range of 0.001 micrometers to 1,000 micrometers, preferably 0.01 micrometers to 100 micrometers, more preferably 0.1 micrometers to 10 micrometers.

Aspect 10. The article according to any preceding aspect, wherein the multi-scalar texture comprises features having a diameter in a range of 0.001 micrometers to 100 micrometers, preferably 0.01 micrometers to 100 micrometers, more preferably 0.1 micrometers to 10 micrometers.

Aspect 11. The article according to any preceding aspect, wherein the multi-scalar texture comprises features having a height in a range of 0.001 micrometers to 100 micrometers, preferably 0.01 micrometers to 100 micrometers, more preferably 0.1 micrometers to 10 micrometers.

Aspect 12. The article according to any preceding aspect, wherein the multi-scalar texture comprises features having a pitch in a range of 0.001 micrometers to 1,000 micrometers, preferably 0.01 micrometers to 100 micrometers, more preferably 0.1 micrometers to 10 micrometers.

Aspect 13. The article according to any preceding aspect, wherein a thickness of the porous polymer coating directly contacting the substrate is less than the height of the features.

Aspect 14. The article according to any preceding aspect, wherein a contact angle of water with the porous polymer coating is in a range of 0° to 10° after an elapsed time in a range of 0 to 30 seconds.

Aspect 15. The article according to any preceding aspect, wherein the multi-scalar texture comprises grating, pillars, or a combination comprising at least one of the foregoing

Aspect 16. A method of forming the article according to any preceding aspect, the method comprising: coating the substrate comprising the multi-scalar texture with a blended polymer solution comprising a pore-forming polymer component and a structural polymer component, wherein the structural polymer component is more hydrophilic than the pore-forming polymer component, and removing at least a portion of the pore-forming polymer component to form the porous polymer coating and the article.

Aspect 17. The method of Aspect 16, wherein the structural polymer component comprises a first polymer and a second polymer, wherein the first polymer is more hydrophilic than the second polymer.

Aspect 18. The method of Aspect 17, wherein the first polymer and the second polymer comprise a same polymer having differing molecular weights.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an embodiment" means that a particular element described in connection with the embodiment is included in at least one embodiment described herein, and may or may not be present in other embodiments. In addition, it is to be understood that the described elements may be combined in any suitable manner in the various embodiments.

Unless specified to the contrary herein, all test standards are the most recent standard in effect as of the filing

date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl ($-HC=CH_2$)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene ($-CH_2-$) or, propylene ($-(CH_2)_3-$)). "Cycloalkylene" means a divalent cyclic alkylene group, $-C_nH_{2n-x}$, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a $C_{1-9}$ alkoxy, a $C_{1-9}$ haloalkoxy, a nitro ($-NO_2$), a cyano (-CN), a $C_{1-6}$ alkyl sulfonyl ($-S(=O)_2$-alkyl), a $C_{6-12}$ aryl sulfonyl ($-S(=O)_2$-aryl)a thiol (-SH), a thiocyano (-SCN), a tosyl ($CH_3C_6H_4SO_2-$), a $C_{3-12}$ cycloalkyl, a $C_{2-12}$ alkenyl, a $C_{5-12}$ cycloalkenyl, a $C_{6-12}$ aryl, a $C_{7-13}$ arylalkylene, a $C_{4-12}$ heterocycloalkyl, and a $C_{3-12}$ heteroaryl instead of hydrogen, provided that the substituted atom's normal valence is not exceeded. The number of carbon atoms indicated in a group is exclusive of any substituents. For example $-CH_2CH_2CN$ is a $C_2$ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

**1.** An article comprising:

a substrate comprising a multi-scalar texture, wherein the multi-scalar texture comprises features having at least one of

a sidewall-to-sidewall spacing therebetween in a range of 0.001 micrometers to 1,000 micrometers, preferably 0.01 micrometers to 100 micrometers, more preferably 0.1 micrometers to 10 micrometers;

a diameter in a range of 0.001 micrometers to 100 micrometers, preferably 0.01 micrometers to 100 micrometers, more preferably 0.1 micrometers to 10 micrometers;

a height in a range of 0.001 micrometers to 100 micrometers, preferably 0.01 micrometers to 100 micrometers, more preferably 0.1 micrometers to 10 micrometers; and/or

a pitch in a range of 0.001 micrometers to 1,000 micrometers, preferably 0.01 micrometers to 100 micrometers, more preferably 0.1 micrometers to 10 micrometers; and

a porous polymer coating, wherein the porous polymer coating has an average pore diameter in a range of 1 nanometer to 100,000 nanometers, preferably 10 nanometers to 10,000 nanometers, more preferably 10 nanometers to 1,000 nanometers.

**2.** The article according to Claim 1, wherein the substrate comprises a hydrophilic polymer, preferably a polyamide, more preferably polycaprolactam.

**3.** The article according to Claim 1, wherein the substrate comprises silicon.

**4.** The article according to any preceding claim, wherein the porous polymer coating covers exposed surfaces of the substrate between features of the multi-scalar texture and all external surfaces of the multi-scalar texture.

**5.** The article according to any preceding claim, wherein the porous polymer coating has an average pore diameter of less than 100 nanometers.

**6.** The article according to any preceding claim, wherein the article is transparent.

**7.** The article according to any preceding claim, wherein the porous polymer coating exhibits 2-D capillary rise.

**8.** The article according to any preceding claim, wherein the porous polymer coating comprises a hydrophilic polymer, preferably an acrylate, a polyamide, or a polyimide, more preferably poly(methyl methacrylate) or poly[imino(1,6-dioxohexamethylene) iminohexamethylene].

**9.** The article according to any preceding claim, wherein the multi-scalar texture comprises features having a sidewall-to-sidewall spacing therebetween in a range of 0.001 micrometers to 1,000 micrometers, preferably 0.01 micrometers to 100 micrometers, more preferably 0.1 micrometers to 10 micrometers.

**10.** The article according to any preceding claim, wherein the multi-scalar texture comprises features having a diameter in a range of 0.001 micrometers to 100 micrometers, preferably 0.01 micrometers to 100 micrometers, more preferably 0.1 micrometers to 10 micrometers.

**11.** The article according to any preceding claim, wherein the multi-scalar texture comprises features having a height in a range of 0.001 micrometers to 100 micrometers, preferably 0.01 micrometers to 100 micrometers, more preferably 0.1 micrometers to 10 micrometers.

**12.** The article according to any preceding claim, wherein the multi-scalar texture comprises features having a pitch in a range of 0.001 micrometers to 1,000 micrometers, preferably 0.01 micrometers to 100 micrometers, more preferably 0.1 micrometers to 10 micrometers.

**13.** The article according to any preceding claim, wherein a contact angle of water with the porous polymer coating is in a range of 0° to 10° after an elapsed time in a range of 0 to 30 seconds.

**14.** The article according to any preceding claim, wherein the multi-scalar texture comprises grating, pillars, or a combination comprising at least one of the foregoing.

**15.** A method of forming the article according to any preceding claim, the method comprising:

coating the substrate comprising the multi-scalar texture with a blended polymer solution comprising a pore-forming polymer component and a structural polymer component, wherein the structural polymer component is more hydrophilic than the pore-forming polymer component, and
removing at least a portion of the pore-forming polymer component to form the porous polymer coating and the article.

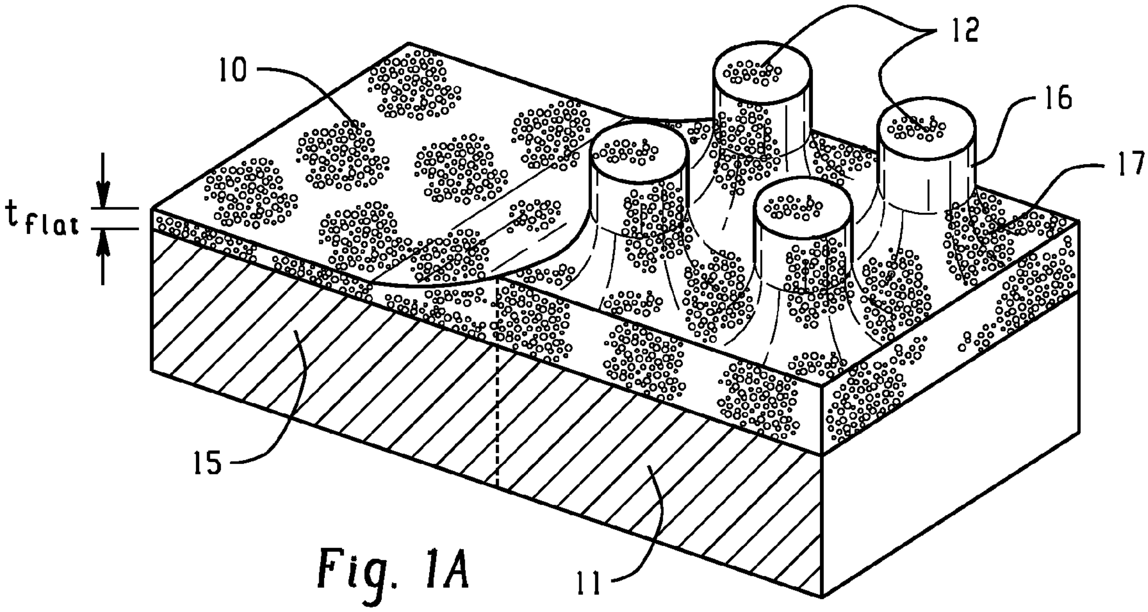


Fig. 1A

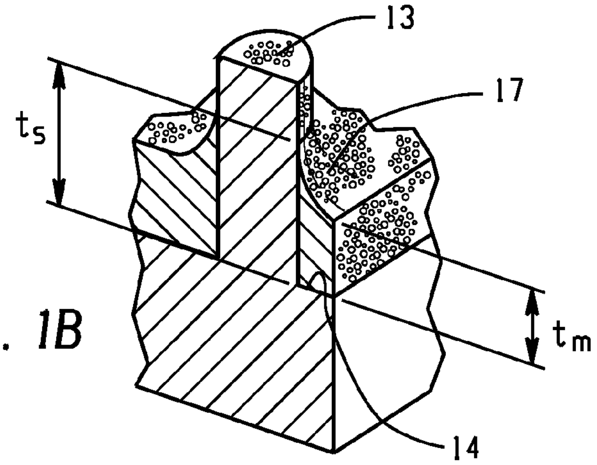


Fig. 1B

Fig. 2

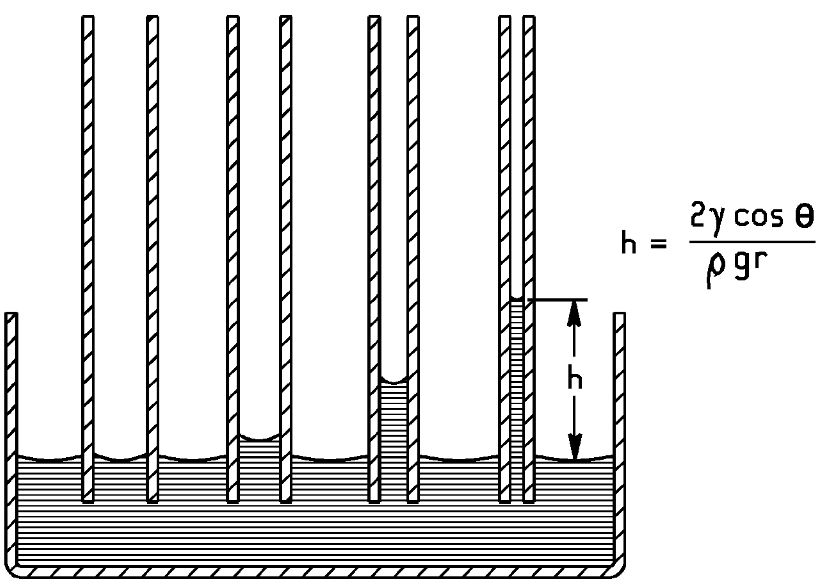

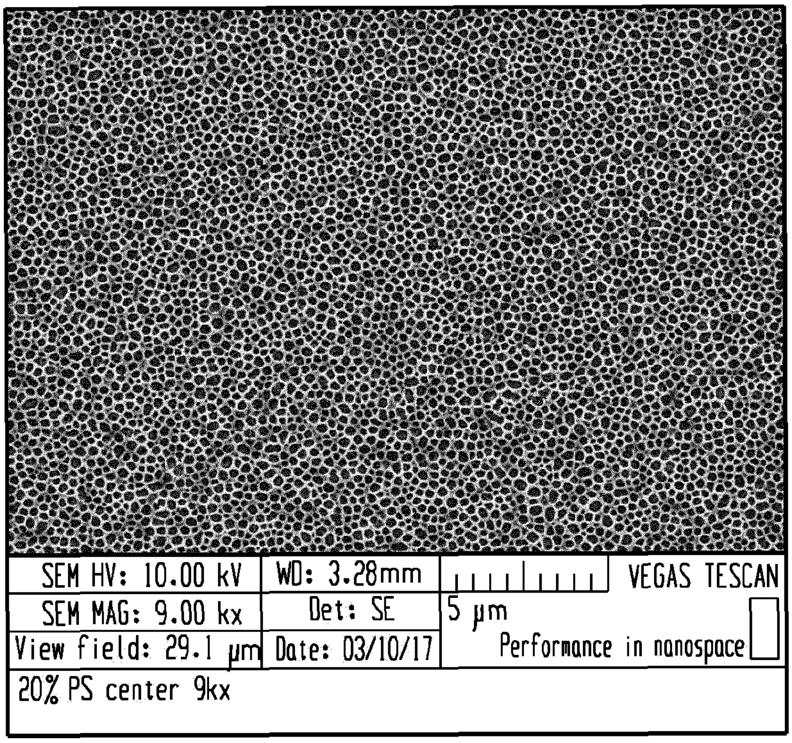


Fig. 3A

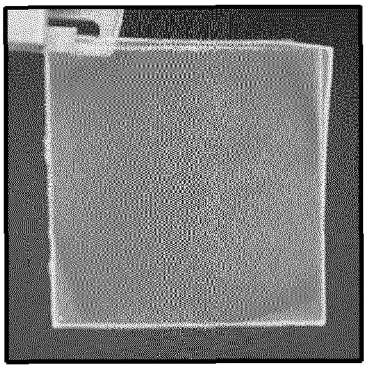

Fig. 3B

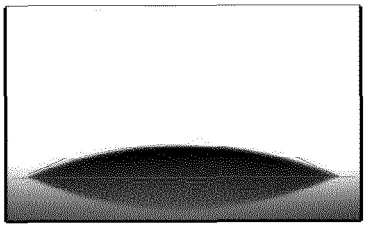

Fig. 3C

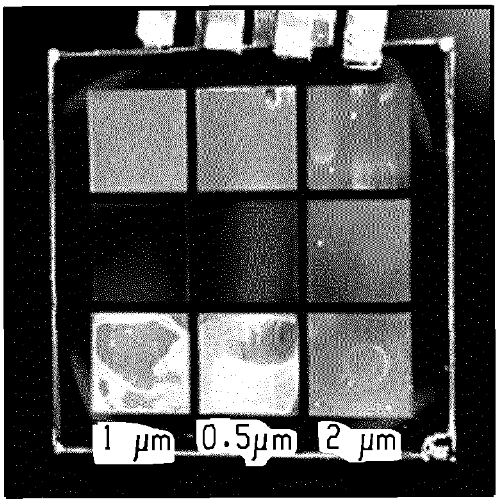


Fig. 4A

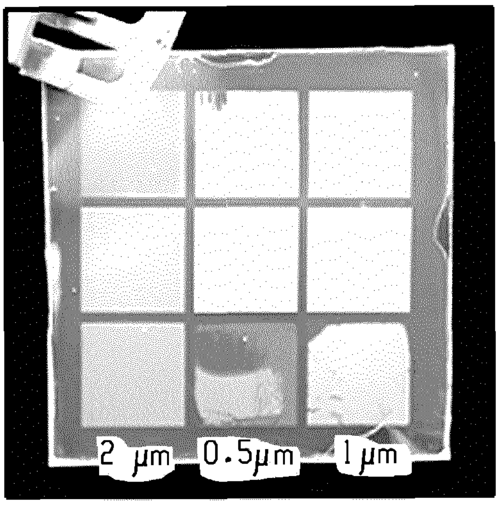


Fig. 4B

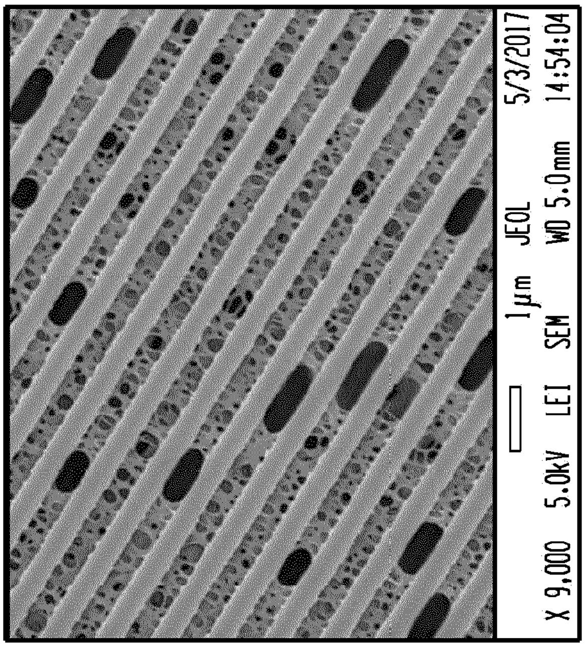


Fig. 5A

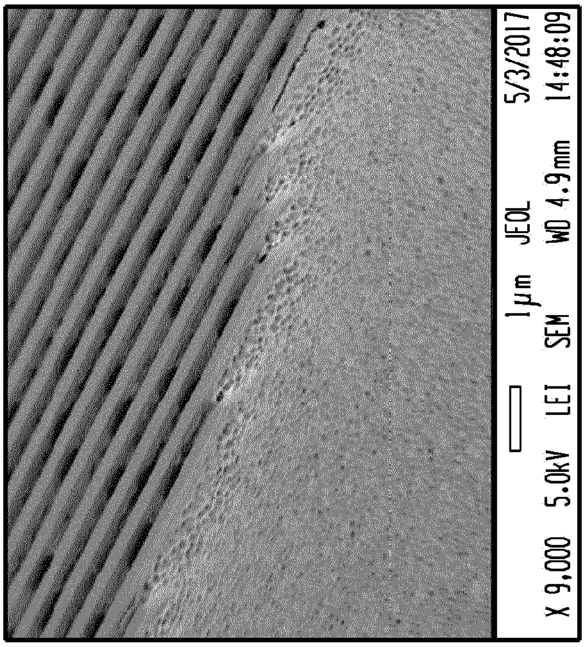


Fig. 5B

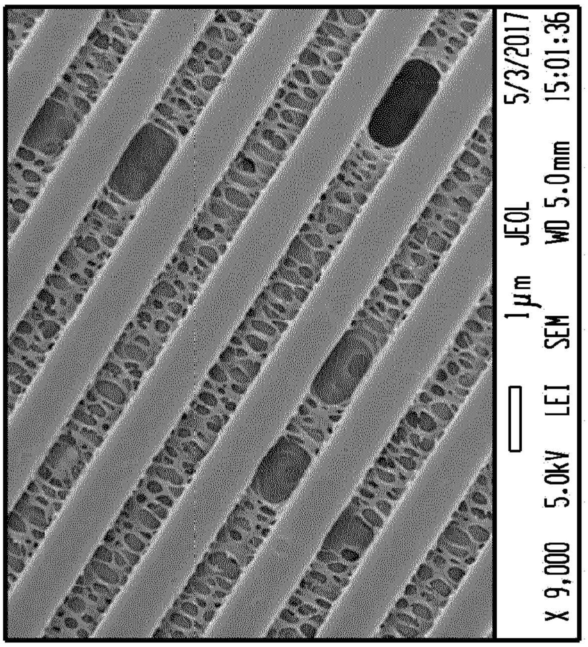


Fig. 5C

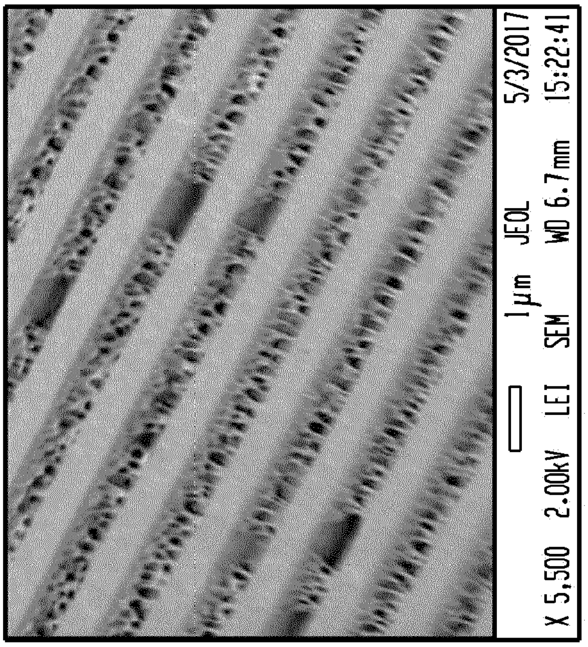


Fig. 5D

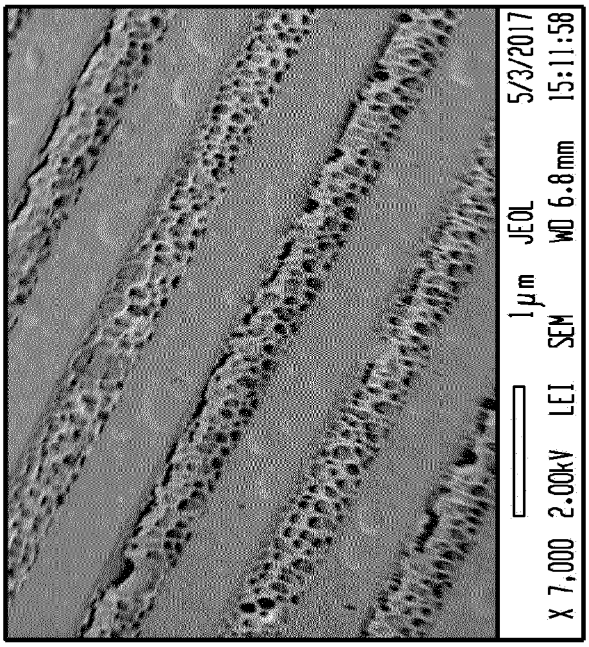
X 7,000 2.00kV LEI SEM
1μm
JEOL WD 6.8mm 5/3/2017 15:11:58

Fig. 5F

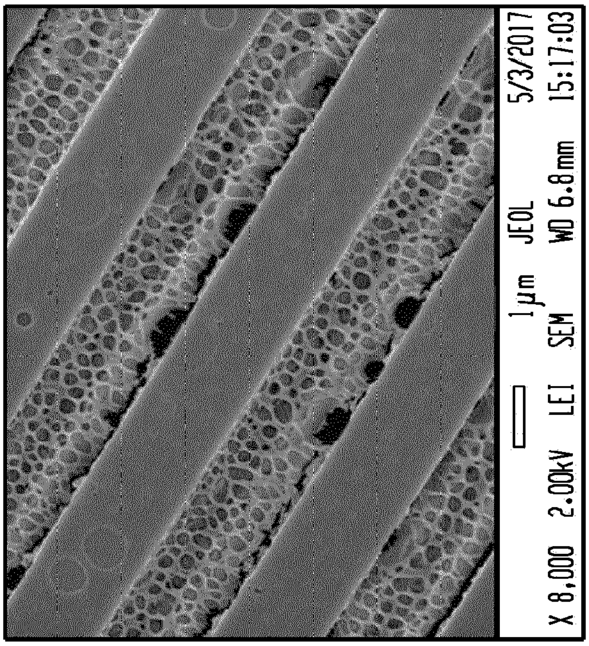
X 8,000 2.00kV LEI SEM
1μm
JEOL WD 6.8mm 5/3/2017 15:17:03

Fig. 5E

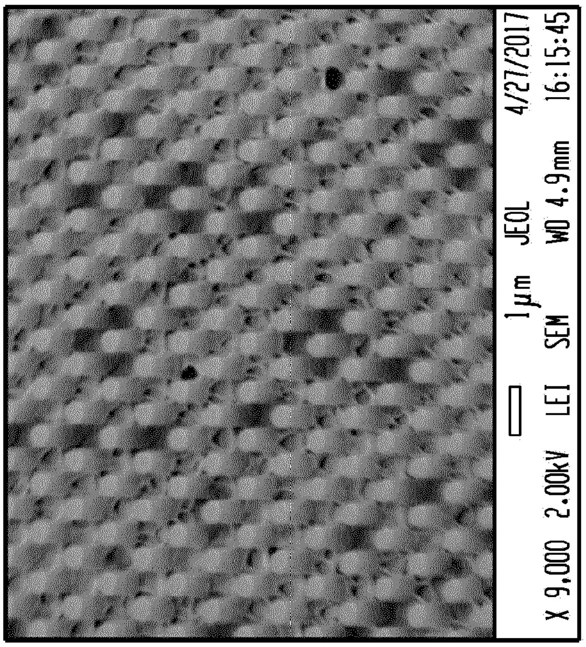


Fig. 6A

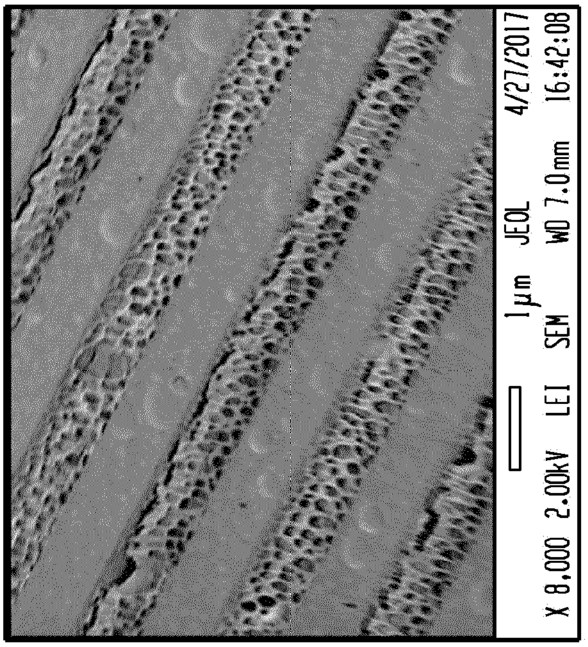


Fig. 6B

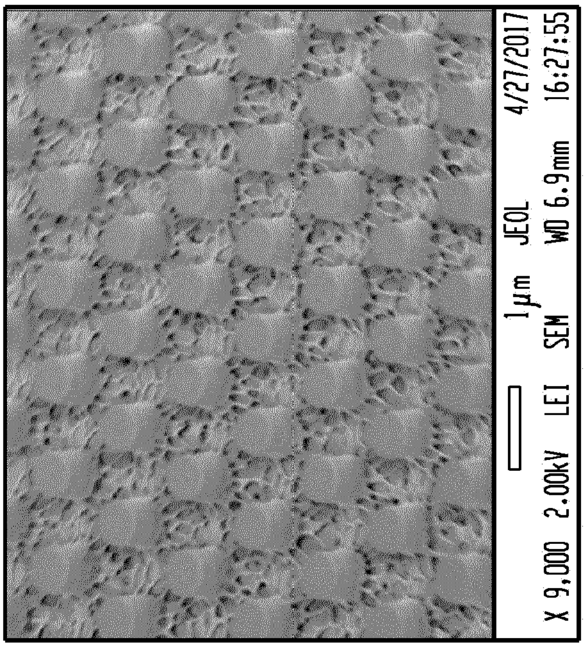


Fig. 6C

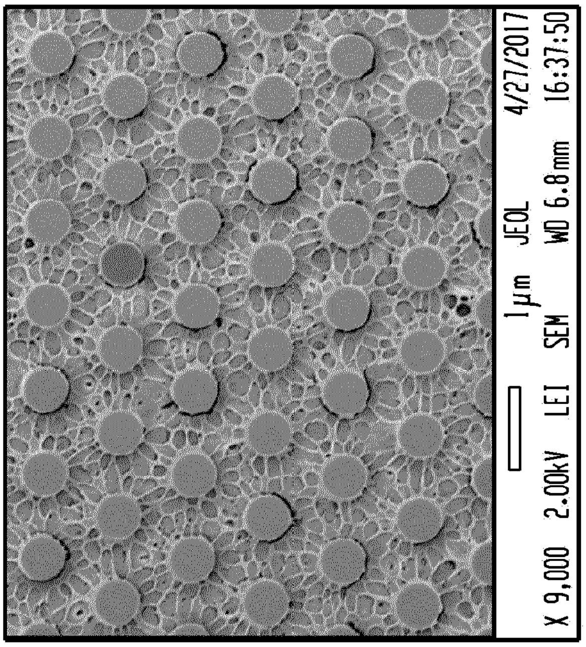


Fig. 6D

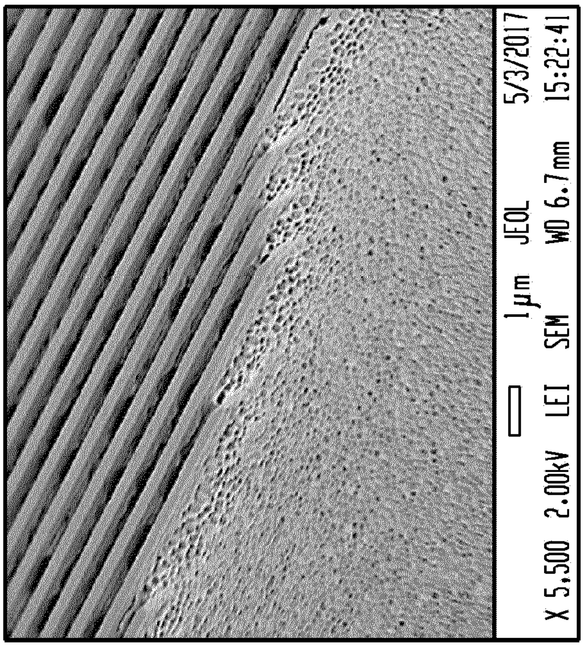


Fig. 7A

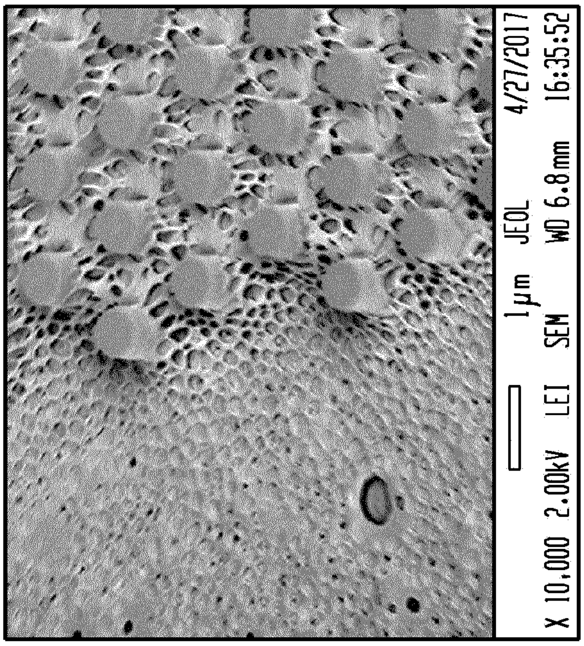


Fig. 7B

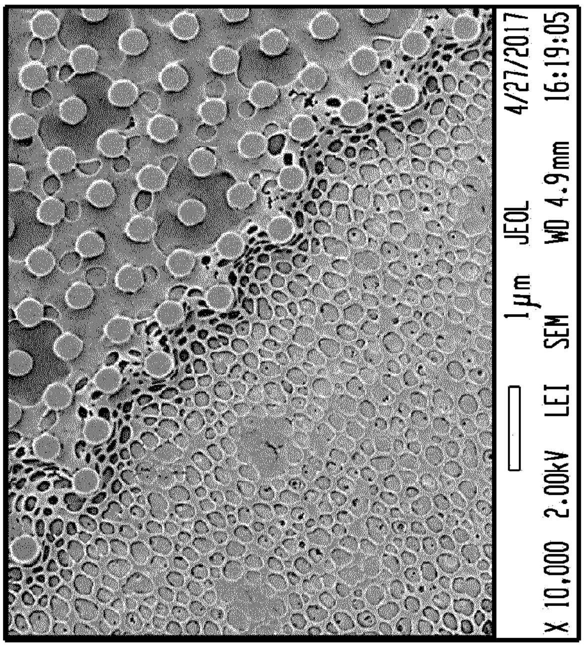


Fig. 7C

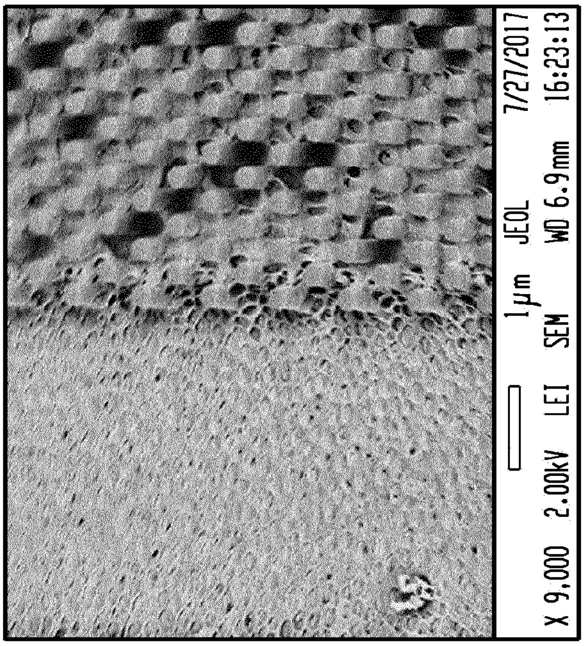


Fig. 7D

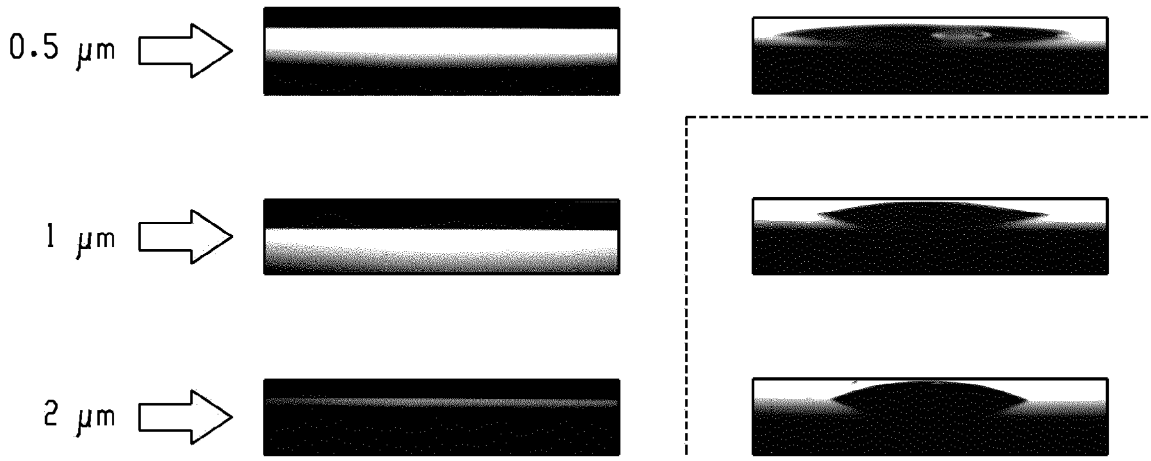


Fig. 8

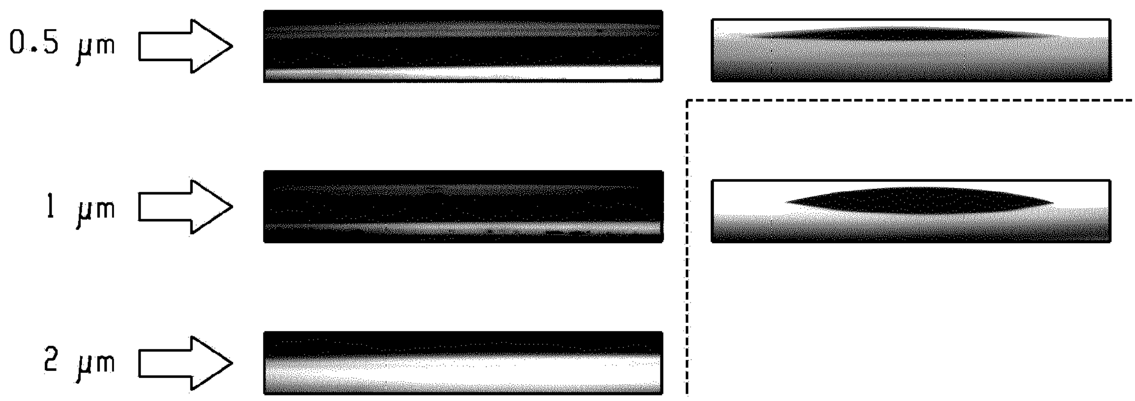


Fig. 9

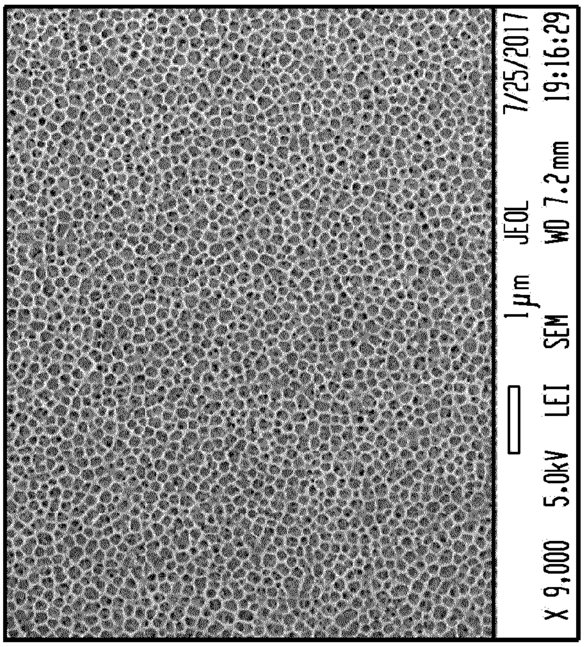


Fig. 10A

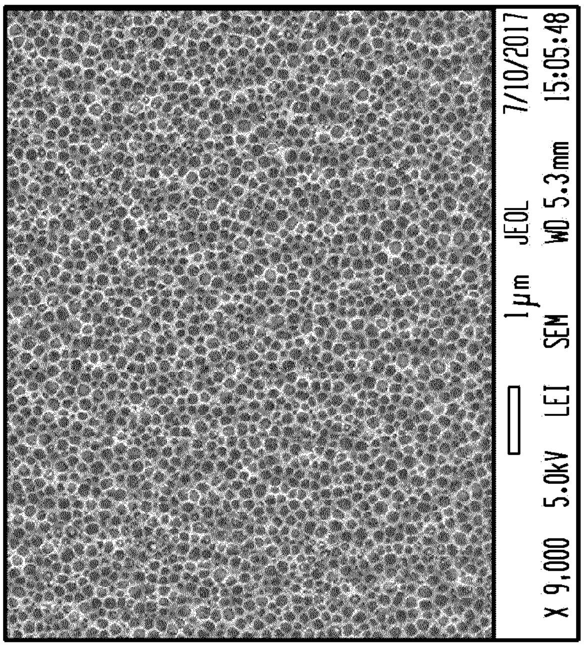


Fig. 10B

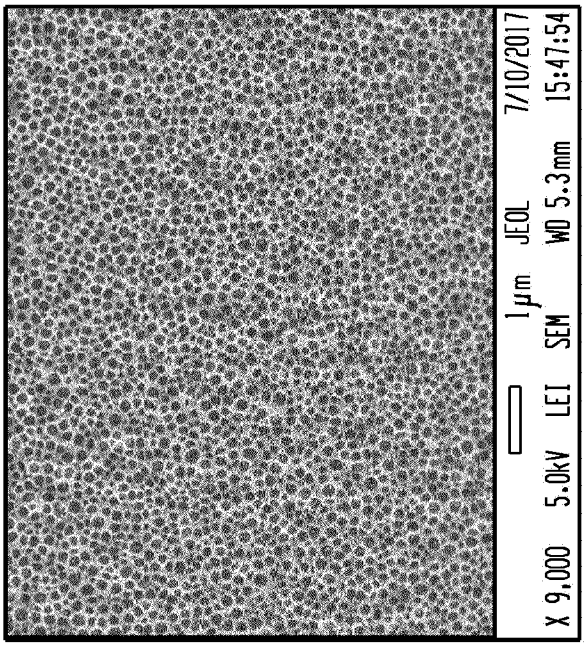


Fig. 10C

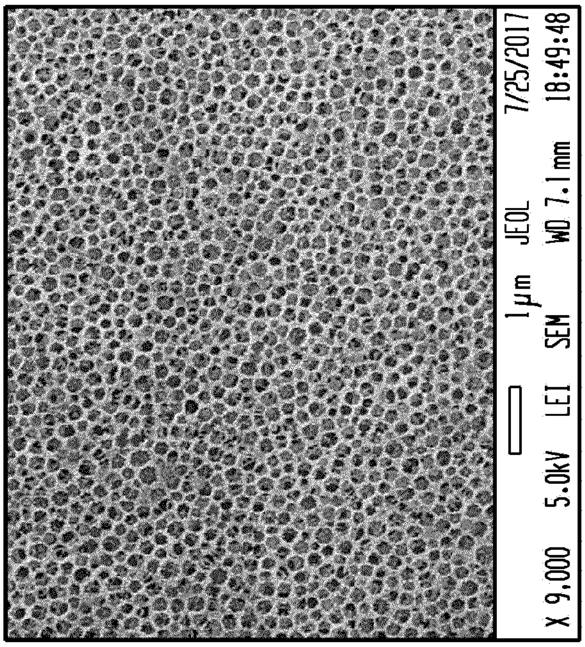


Fig. 10D

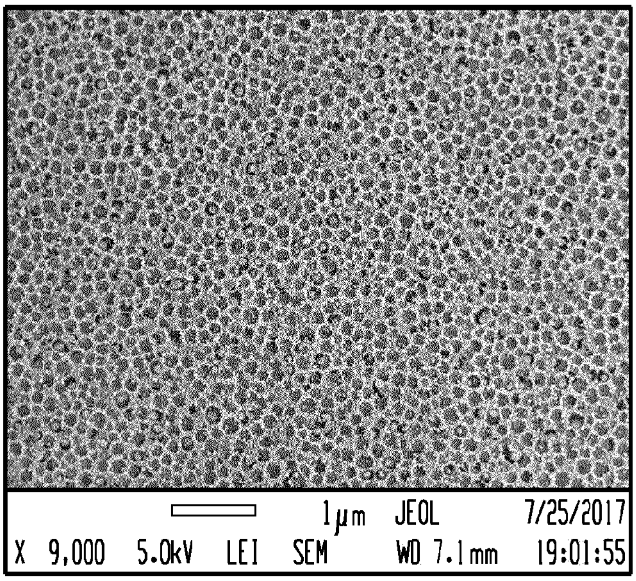


Fig. 10E

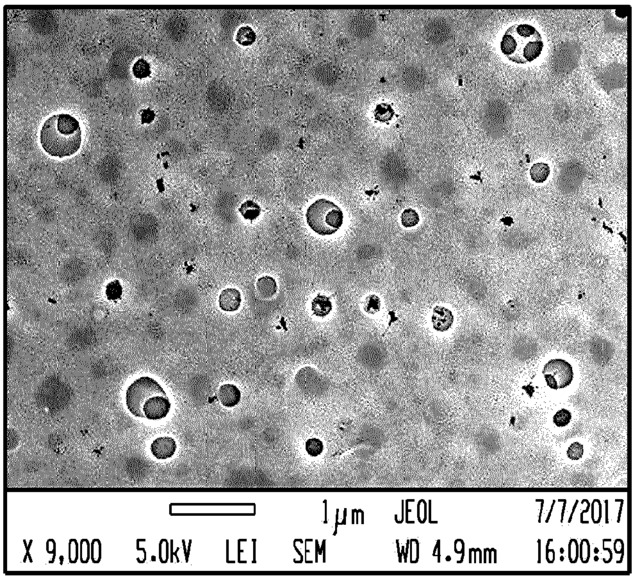


Fig. 10F

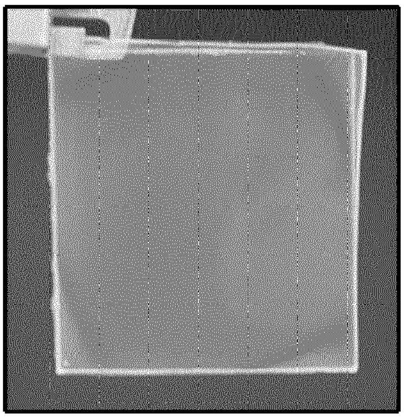

Fig. 11A

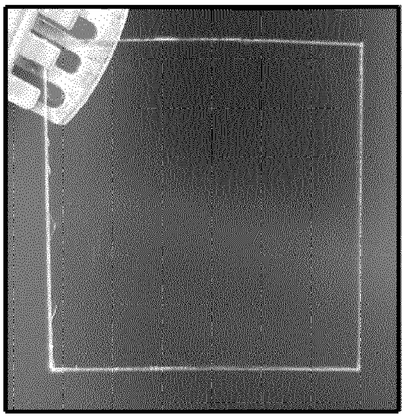

Fig. 11B

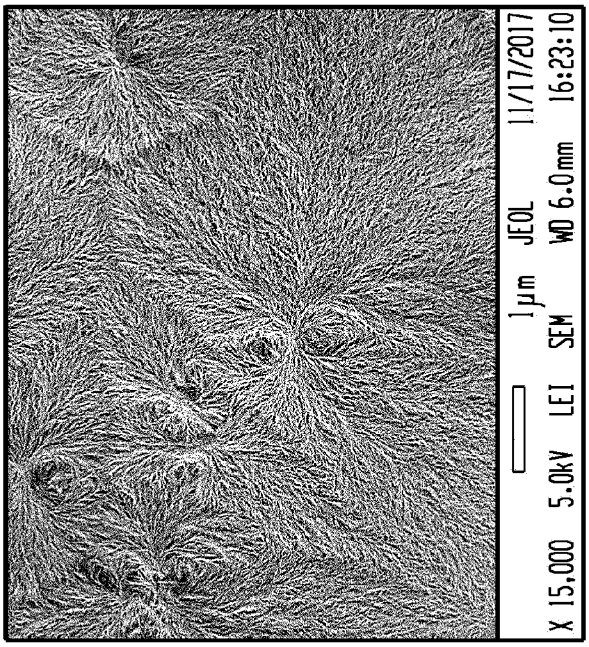


Fig. 12B

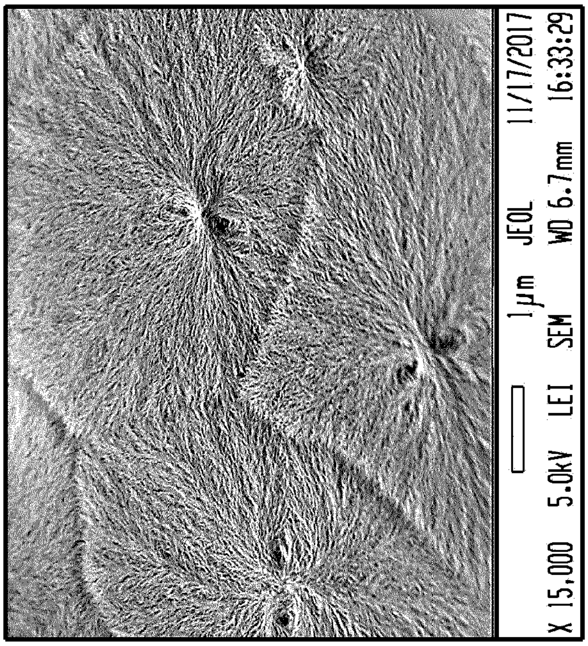


Fig. 12A

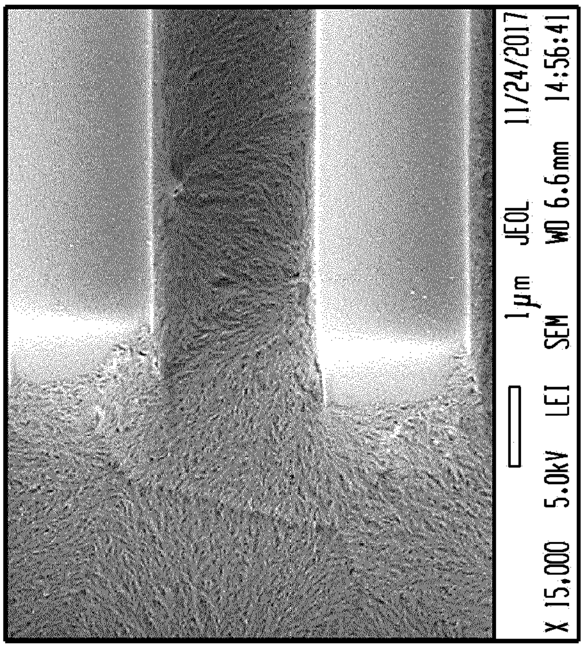


Fig. 13A

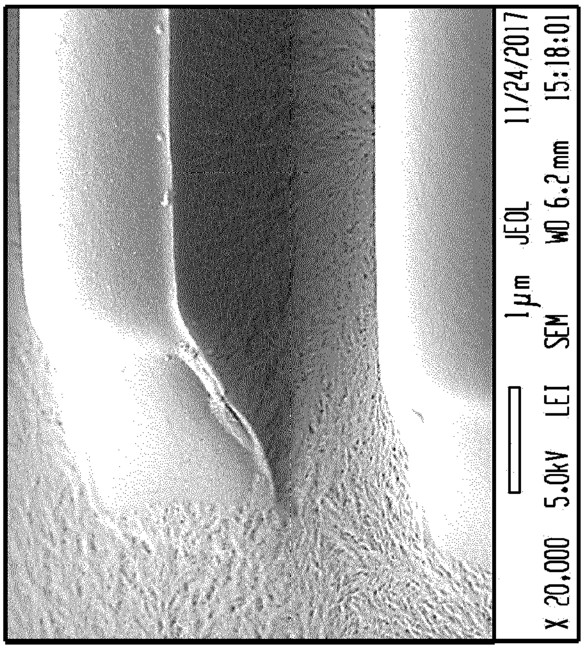


Fig. 13B

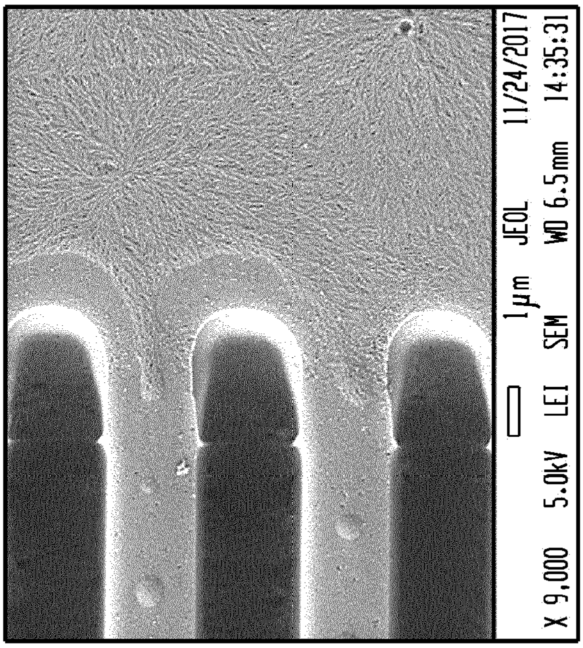


Fig. 13C

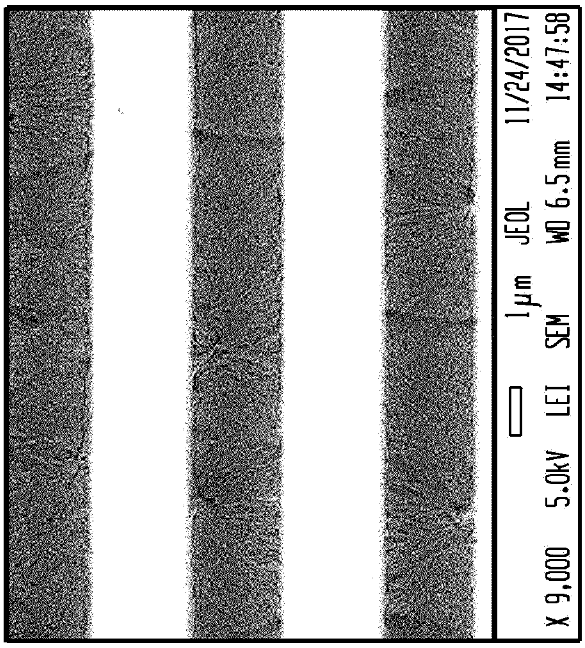


Fig. 13D

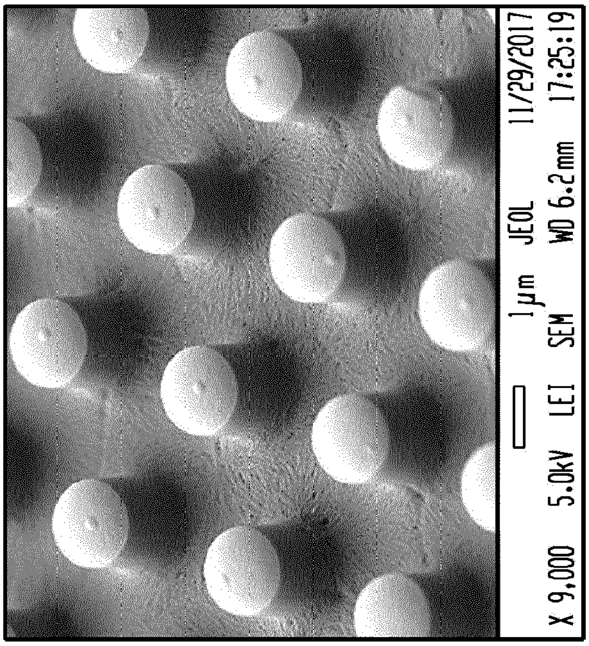


Fig. 14A

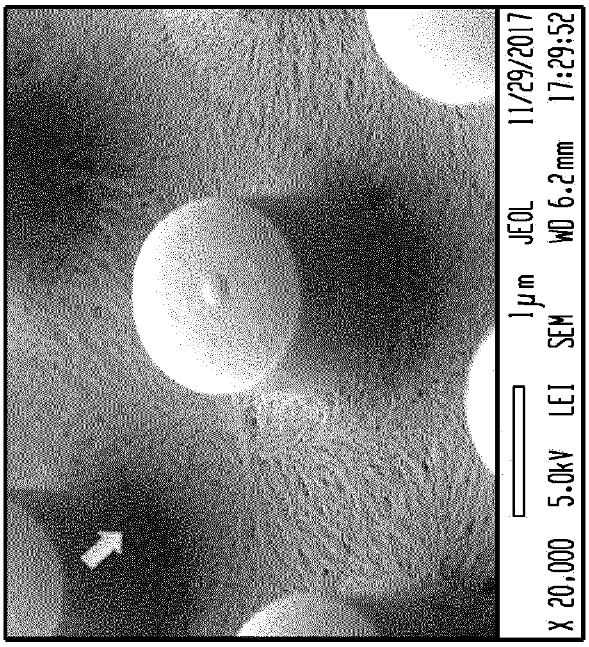


Fig. 14B

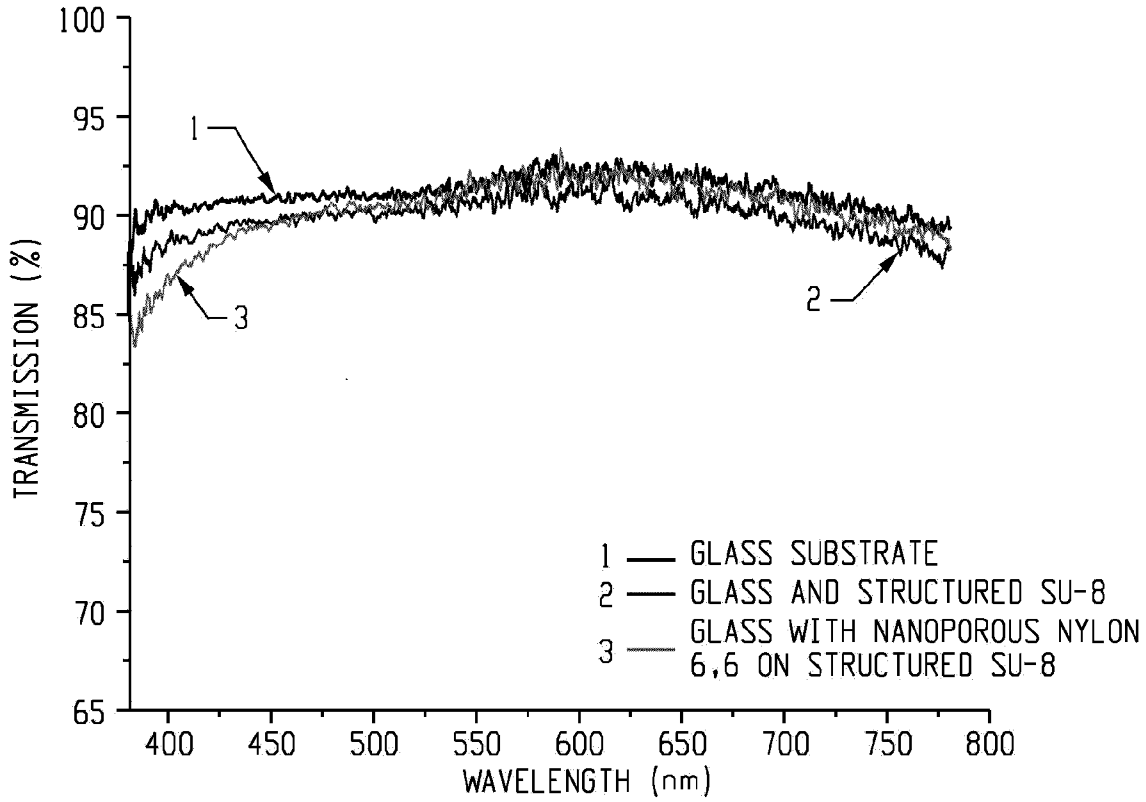


Fig. 15A

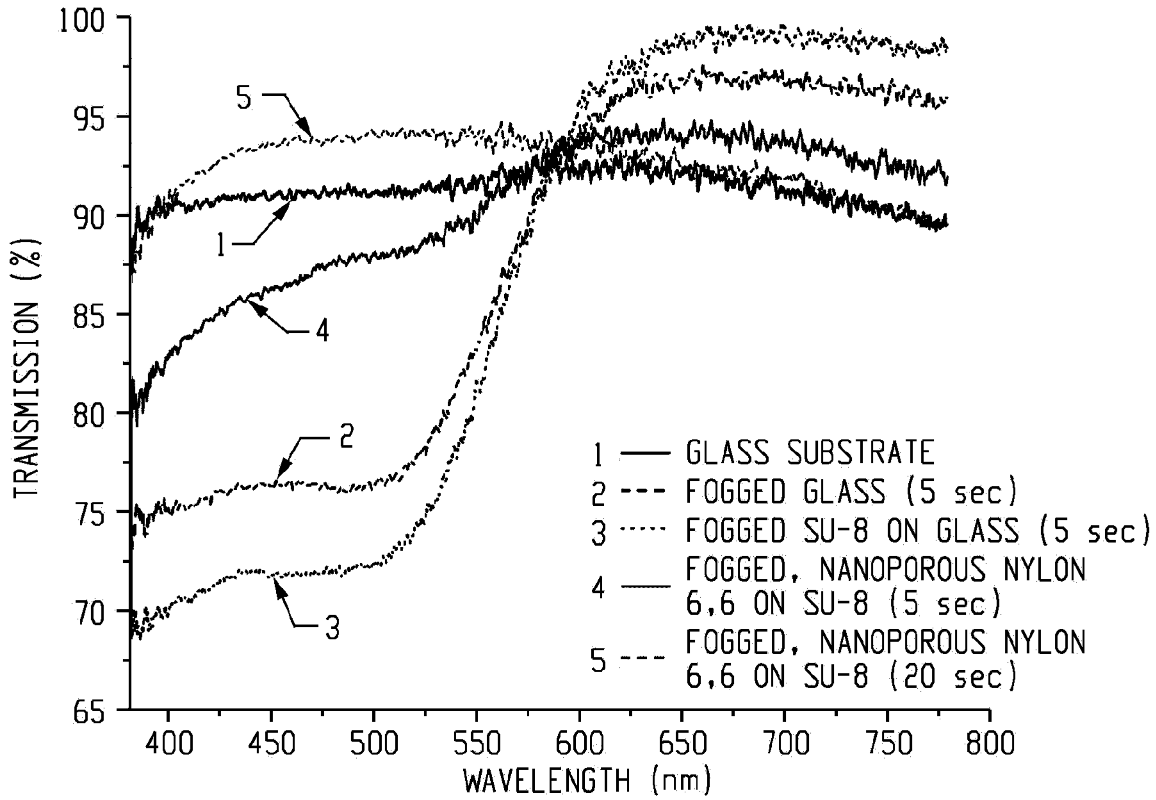


Fig. 15B

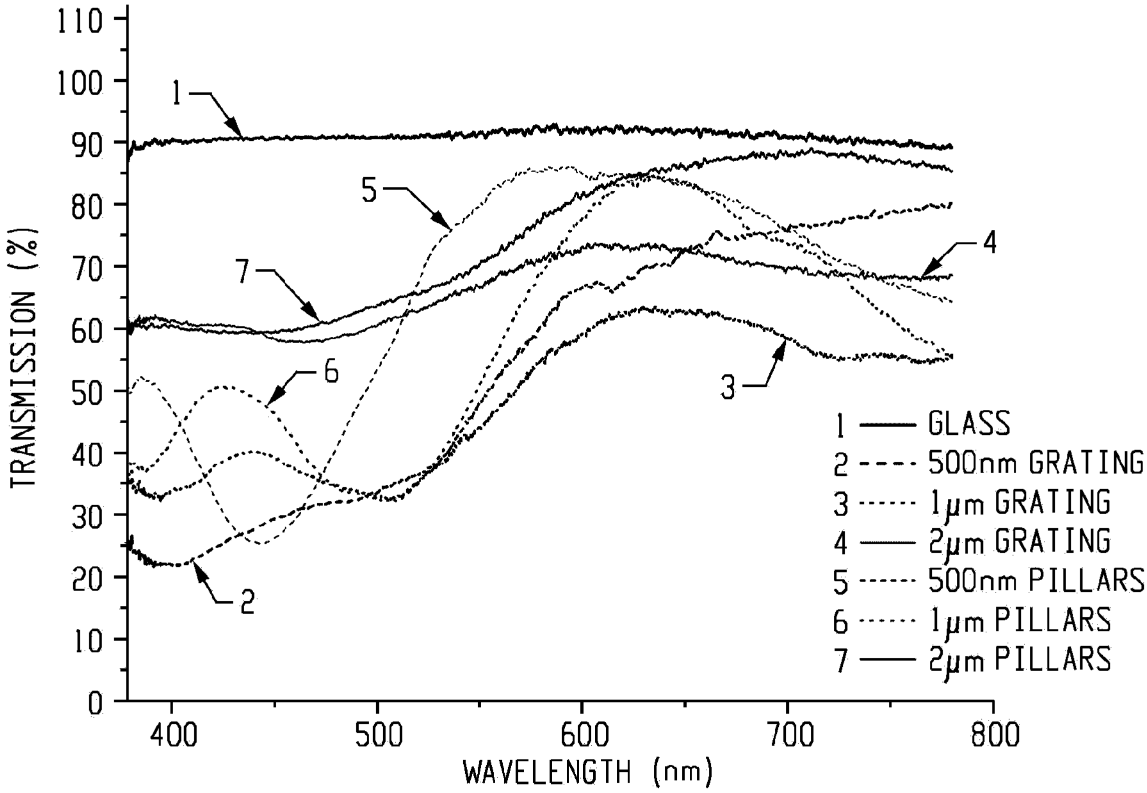


*Fig. 16A*

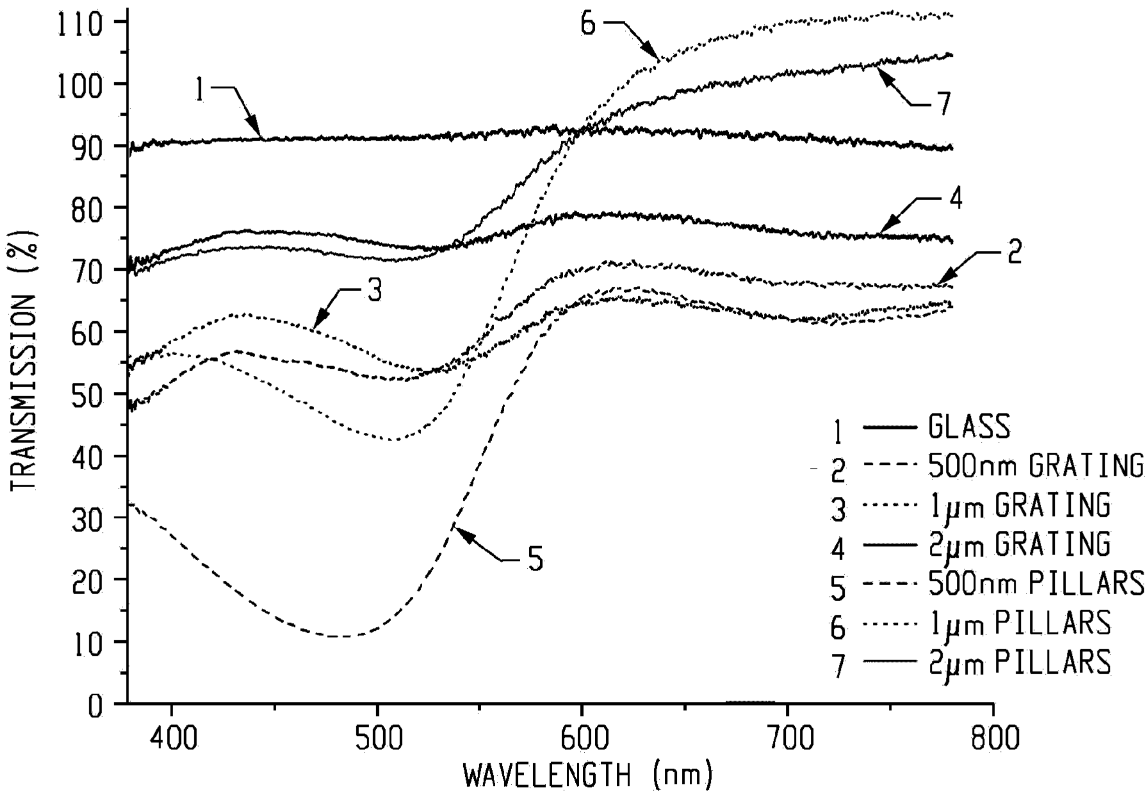


*Fig. 16B*

Europäisches Patentamt
European Patent Office
Office européen des brevets

# EUROPEAN SEARCH REPORT

Application Number
EP 19 15 5912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2007/178357 A1 (VYAS GAYATRI [US] ET AL) 2 August 2007 (2007-08-02)<br>* paragraphs [0002], [0024]; claims 1-7,13,17,31-38,44; figure 1 * | 1-15<br>1-15 | INV.<br>C08J7/04 |
| X<br>Y | US 2008/044715 A1 (VYAS GAYATRI [US] ET AL) 21 February 2008 (2008-02-21)<br>* paragraphs [0013], [0023], [0026], [0027], [0035], [0037], [0041], [0047]; claims; figures 3,5 * | 1-15<br>1-15 | |
| X | DATABASE WPI<br>Week 201201<br>Thomson Scientific, London, GB;<br>AN 2011-H74480<br>XP002793230,<br>& KR 2011 0064754 A (U BIOMED INC)<br>15 June 2011 (2011-06-15)<br>* abstract *<br>* paragraph [0036]; claims; figure 1d * | 1-15 | |
| Y | EP 2 693 238 A1 (DEXERIALS CORP [JP])<br>5 February 2014 (2014-02-05)<br>* paragraphs [0010], [0014], [0016], [0046], [0047], [0055], [0063], [0109], [0149] - [0155]; claims 1-3,5; figure 24 * | 1-15 | TECHNICAL FIELDS SEARCHED (IPC)<br>C08J |
| Y | CN 109 059 592 A (INST ENG THERMOPHYSICS CAS) 21 December 2018 (2018-12-21)<br>* abstract *<br>* paragraph [0021]; claims 1-6; figure 1 * | 1-15 | |

The present search report has been drawn up for all claims

2

| Place of search | Date of completion of the search | Examiner |
|---|---|---|
| Munich | 26 July 2019 | Pamies Olle, Silvia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 15 5912

This annex lists the patent family members relating to the patent documents cited in the above-mentioned European search report. The members are as contained in the European Patent Office EDP file on
The European Patent Office is in no way liable for these particulars which are merely given for the purpose of information.

26-07-2019

| Patent document cited in search report | Publication date | Patent family member(s) | Publication date |
|---|---|---|---|
| US 2007178357 A1 | 02-08-2007 | CN 101009385 A | 01-08-2007 |
| | | DE 102007003825 A1 | 09-08-2007 |
| | | JP 4890279 B2 | 07-03-2012 |
| | | JP 2007227369 A | 06-09-2007 |
| | | US 2007178357 A1 | 02-08-2007 |
| US 2008044715 A1 | 21-02-2008 | CN 1941477 A | 04-04-2007 |
| | | DE 102006043279 A1 | 22-03-2007 |
| | | JP 2007095677 A | 12-04-2007 |
| | | US 2008044715 A1 | 21-02-2008 |
| KR 20110064754 A | 15-06-2011 | NONE | |
| EP 2693238 A1 | 05-02-2014 | CN 103518149 A | 15-01-2014 |
| | | EP 2693238 A1 | 05-02-2014 |
| | | JP 6164085 B2 | 19-07-2017 |
| | | JP WO2012133946 A1 | 28-07-2014 |
| | | KR 20140036159 A | 25-03-2014 |
| | | RU 2013143556 A | 20-05-2015 |
| | | US 2014098422 A1 | 10-04-2014 |
| | | WO 2012133946 A1 | 04-10-2012 |
| CN 109059592 A | 21-12-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4970272 A